(19) Europäisches Patentamt
European Patent Office
Office européen des brevets

(11) **EP 2 898 581 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(21) Anmeldenummer: **13792298.5**

(22) Anmeldetag: **08.11.2013**

(51) Int Cl.:
*H02J 3/24* (2006.01)    *G05B 13/04* (2006.01)
*G06F 17/11* (2006.01)

(86) Internationale Anmeldenummer:
**PCT/EP2013/073409**

(87) Internationale Veröffentlichungsnummer:
**WO 2014/076011 (22.05.2014 Gazette 2014/21)**

(54) **VERFAHREN ZUR RECHNERGESTÜTZTEN STEUERUNG DER LEISTUNG IN EINEM ELEKTRISCHEN STROMNETZ**

METHOD FOR THE COMPUTER-AIDED CONTROL OF THE POWER IN AN ELECTRICAL GRID

PROCÉDÉ DE COMMANDE DE PUISSANCE ASSISTÉE PAR ORDINATEUR DANS UN RÉSEAU ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2012 DE 102012220902**
**25.10.2013 DE 102013221750**

(43) Veröffentlichungstag der Anmeldung:
**29.07.2015 Patentblatt 2015/31**

(73) Patentinhaber: **Siemens Aktiengesellschaft**
**80333 München (DE)**

(72) Erfinder:
• **MÜNZ, Ulrich**
**81673 München (DE)**
• **HEYDE, Chris Oliver**
**91058 Erlangen (DE)**
• **SOLLACHER, Rudolf**
**84174 Eching (DE)**

(56) Entgegenhaltungen:
**EP-A1- 2 683 077**

• **FLORIAN DÖRFLER ET AL: "Synchronization in Complex Oscillator Networks and Smart Grids", 20120731 , 31. Juli 2012 (2012-07-31), Seiten 1-20, XP007922657, Gefunden im Internet: URL:http://arxiv.org/abs/1208.0045 & EP 1 324 457 A2 (ABB TECHNOLOGY AG [CH]) 2. Juli 2003 (2003-07-02)**

**Beschreibung**

Die Erfindung betrifft ein Verfahren zur rechnergestützten Steuerung der elektrischen Leistung in einem elektrischen Stromnetz sowie eine entsprechende Vorrichtung. Unter Leistung ist hier und im Folgenden Wirkleistung zu verstehen.

Ein elektrisches Stromnetz umfasst eine Vielzahl von über Stromleitungen miteinander verbundene Netzknoten, welche elektrische Leistung in das Stromnetz einspeisen bzw. elektrische Leistung aus dem Stromnetz entnehmen. Zum stabilen Betrieb eines Stromnetzes ist dabei ein schneller Ausgleich zwischen eingespeister elektrischer Leistung und entnommener elektrischer Leistung erforderlich. Hierzu werden in entsprechenden Netzknoten Proportionalregler verwendet, welche die eingespeiste bzw. entnommene Leistung in Abhängigkeit von der Differenz zwischen der Frequenz der Spannung im jeweiligen Netzknoten und der Nennfrequenz des Stromnetzes einstellen. Zum stabilen Betrieb des Stromnetzes sind dabei ein Proportionalitätsfaktor und eine Referenzleistung für den jeweiligen Proportionalregler geeignet festzulegen. Herkömmlicherweise werden heuristische Ansätze zur Festlegung dieser Parameter verwendet. Anschließend wird das Netz basierend auf aufwändigen Simulationen auf Stabilität und Robustheit analysiert und gegebenenfalls die Parameter neu festgelegt.

In dem Dokument [1] wird die Stabilität eines Stromnetzes unter Berücksichtigung der Parameter von Proportionalreglern untersucht, ohne dass beschrieben wird, wie die Parameter in Bezug auf die Stabilität des Stromnetzes optimal eingestellt werden können. Stattdessen wird ein festes Verhältnis zwischen Proportionalitätsfaktor und Referenzleistung für alle Erzeuger im Stromnetz vorgeschlagen.

In der Druckschrift [2] wird beschrieben, wie die Primärregelleistung in einem Stromnetz optimal zwischen den Netzknoten verteilt werden kann. Die Primärregelleistung jedes Netzknoten hängt direkt von den Proportionalitätsfaktoren der Netzknoten ab. Für diese Optimierung wird die Stabilitätsreserve des Stromnetzes basierend auf neuronalen Netzen abgeschätzt. Die Stabilität stellt in diesem Verfahren eine Nebenbedingung dar und wird nicht zur Optimierung des Stromnetzes herangezogen.

In einem Dokument Dörfler et al "Synchronization in Complex Oscillator Networks and Smart Grids" Seiten 1 bis 20, siehe http://arxiv.org/pdf/1208.0045v1, wird ein Verfahren zum Synchronisieren von vollständig nicht linearen, nicht im Gleichgewicht befindlichen und dynamischen Netzwerken beschrieben.

Das Dokument EP 2 683 077 A1 offenbart einen Leistungsregler für ein Energieerzeugungssystem basierend auf statischen Leistungswandlern. Der Leistungsregler umfasst eine Mehrzahl von Steuereinheiten, über welche verschiedene elektrische Größen eingestellt werden.

Aufgabe der Erfindung ist es, ein einfaches und effizientes Verfahren zur rechnergestützten Steuerung der Leistung in einem Stromnetz bereitzustellen, welches einen stabilen Betrieb des Stromnetzes sicherstellt.

Diese Aufgabe wird durch das Verfahren gemäß Patentanspruch 1 bzw. die Vorrichtung gemäß Patentanspruch 18 gelöst. Weiterbildungen der Erfindung sind in den abhängigen Ansprüchen definiert.

Das erfindungsgemäße Verfahren dient zur Steuerung eines Stromnetzes und insbesondere eines Hochspannungsnetzes oder eines Mittelspannungsnetzes. Das Stromnetz weist eine vorgegebene Nennfrequenz (z.B. 50 Hz oder 60 Hz) auf, welche ggf. auch variabel eingestellt werden kann, und umfasst eine Mehrzahl von über Stromleitungen miteinander verbundenen Netzknoten, welche jeweils Leistung in das Stromnetz einspeisen oder aus dem Stromnetz entnehmen. Es sind dabei sowohl Netzknoten vorhanden, welche Leistung einspeisen als auch Netzknoten, welche Leistung entnehmen. Ein Netzknoten kann einen elektrischen Generator, z.B. basierend auf fossilem Brennstoff oder regenerativen Energien, zur Stromerzeugung umfassen. Ebenso kann ein Netzknoten einen elektrischen Motor beinhalten. Die Netzknoten können gegebenenfalls auch Transformatoren, Gleichrichter und dergleichen umfassen. Insbesondere können in einem Netzknoten auch mehrere Komponenten zur Energieerzeugung und/oder Energieentnahme zusammengefasst sein.

In dem Stromnetz ist die eingespeiste oder entnommene Leistung des jeweiligen Netzknotens über eine Proportionalitätsbeziehung gegeben, gemäß der sich in einem vorgegebenen Frequenzbereich der Spannungen im jeweiligen Netzknoten (d.h. insbesondere in einem Bereich ohne Sättigungsverhalten) die Leistung basierend auf einer Referenzleistung, welche die entnommene oder eingespeiste Leistung bei Nennfrequenz ist, und einem Proportionalitätsfaktor in Abhängigkeit von der Differenz zwischen der Frequenz der Spannung im jeweiligen Netzknoten und der Nennfrequenz des Stromnetzes einstellt. Der Begriff der Frequenz ist dabei weit zu verstehen und umfasst insbesondere auch eine Winkelfrequenz. In zumindest einem Teil der Netzknoten ist ein Proportionalregler vorgesehen, für den die Referenzleistung und/oder der Proportionalitätsfaktor einstellbar sind.

In dem erfindungsgemäßen Verfahren wird in einem Schritt a) ein stationärer Zustand des Stromnetzes modelliert. In diesem stationären Zustand stellt sich eine konstante Frequenz für alle Spannungen der Netzknoten ein, wobei diese Frequenz von der Nennfrequenz des Netzes abweichen kann.

In einem Schritt b) des erfindungsgemäßen Verfahrens wird ein Optimierungsproblem gelöst und hierdurch Referenzleistungen und Proportionalitätsfaktoren für zumindest einen Teil der Proportionalregler bestimmt. Das Optimierungsproblem ist dabei basierend auf einer Bedingung an den modellierten stationären Zustand des Stromnetzes definiert, wobei bei Erfüllung der Bedingung die Phasendifferenzen zwischen den Spannungen benachbarter Netzknoten (d.h. zwischen Netzknoten, welche ohne Zwischenschaltung weiterer Netzknoten miteinander verbunden sind) jeweils kleiner oder kleiner gleich einem maximalen Phasenwert sind. Anschließend wird in einem Schritt c) der zumindest eine Teil der Proportionalregler auf die in Schritt b) bestimmten Referenzleistungen und Proportionalitätsfaktoren eingestellt.

Das erfindungsgemäße Verfahren macht sich die Erkenntnis zunutze, dass eine Bedingung für den stationären Zustand des Netzes existiert, welche die Phasendifferenz zwischen den Spannungen benachbarter Netzknoten berücksichtigt. Dabei führt eine möglichst kleine Phasendifferenz zu einer geringen Belastung der Stromleitungen zwischen den Netzknoten und somit zu einem sehr stabilen und robusten Betrieb des Stromnetzes. Das erfindungsgemäße Optimierungsproblem kann dabei einfach und effizient mit numerischen Verfahren gelöst werden, ohne dass hierzu aufwändige Simulationen des Stromnetzes durchgeführt werden müssen.

Die Schritte a) bis c) des erfindungsgemäßen Verfahrens können in Abhängigkeit von bestimmten Kriterien immer wieder durchgeführt werden, um somit einen optimalen Betrieb des Stromnetzes bei sich verändernden Parametern des Netzes zu gewährleisten. Beispielsweise können die Schritte a) bis c) immer dann durchgeführt werden, wenn die sich im Stromnetz einstellende Netzfrequenz mehr als ein vorbestimmtes Maß von der Nennfrequenz des Stromnetzes abweicht. Demzufolge kann das Netz kontinuierlich in Bezug auf Robustheit und Stabilität optimiert werden.

In einer besonders bevorzugten Ausführungsform lautet die oben genannte Proportionalitätsbeziehung in den jeweiligen Netzknoten wie folgt:

$$\tilde{p}_i = \tilde{p}_{i0} - k_{\theta i}\left(\dot{\tilde{\theta}}_i - \omega_0\right),$$

wobei $\tilde{p}_i$ die von einem jeweiligen Netzknoten i eingespeiste oder entnommene Leistung ist;
wobei $\tilde{p}_{i0}$ der Summe aus der Referenzleistung $p_{i0}$ und der lokalen Last $p_{iL}$ im Knoten i entspricht, wobei $p_{iL}$ immer positives Vorzeichen hat;
wobei $k_{\theta i}$ der Proportionalitätsfaktor im Knoten i ist;
wobei $\dot{\tilde{\theta}}_i$ die Frequenz der Spannung des Netzknotens i ist;
wobei $\omega_0$ die Nennfrequenz des Stromnetzes ist.

Dabei weist eine eingespeiste Leistung ein positives Vorzeichen und eine entnommene Leistung ein negatives Vorzeichen auf.

In einer bevorzugten Ausführungsform des erfindungsgemäßen Verfahrens wird der stationäre Zustand des Stromnetzes basierend auf einem dynamischen physikalischen Modell modelliert wird, wobei das dynamische physikalische Modell den Zeitverlauf der Phasen der Spannungen in den jeweiligen Netzknoten in Abhängigkeit von Parametern des Stromnetzes umfassend die Referenzleistungen und Proportionalitätsfaktoren der Proportionalitätsbeziehungen beschreibt. Vorzugsweise umfasst das dynamische physikalische Modell ein System aus gekoppelten Differentialgleichungen, wobei eine jeweilige Differentialgleichung den zeitlichen Verlauf der Phase der Spannung eines Netzknotens repräsentiert. Das System aus gekoppelten Differentialgleichungen ist dabei insbesondere ein physikalisches Schwingungsgleichungssystem. Das Schwingungsgleichungssystem beruht vorzugsweise auf dem in der Druckschrift [3] beschriebenen Modell (siehe dort Gleichungen (7.201) und (7.202)).

In einer besonders bevorzugten Ausführungsform lautet das im erfindungsgemäßen Verfahren verwendete Schwingungsgleichungssystem wie folgt:

$$M_i\ddot{\tilde{\theta}}_i + k_{\theta i}\dot{\tilde{\theta}}_i = k_{\theta i}\omega_0 + \tilde{p}_{i0} - p_{iL} - \sum_{j\in N_i} b_{ij} u_i\, u_j \sin\left(\tilde{\theta}_i - \tilde{\theta}_j\right),$$

wobei $M_i$ das Trägheitsmoment einer an das Stromnetz gekoppelten Masse, z.B. einer Synchronmaschine, im jeweiligen Netzknoten i ist;
wobei $\ddot{\tilde{\theta}}_i$ die Ableitung der Frequenz der Spannung im jeweiligen Netzknoten i ist;
wobei $\tilde{\theta}_i$ bzw. $\tilde{\theta}_j$ die Phase der Spannung im jeweiligen Netzknoten i bzw. j ist;
wobei $N_i$ die Menge der zu einem jeweiligen Netzknoten i benachbarten Netzknoten (d.h. direkt über eine Stromleitung ohne Zwischenschaltung weiterer Netzknoten mit dem Knoten i verbundene Netzknoten) repräsentiert;
wobei $u_i$ bzw. $u_j$ die Effektivwerte der Spannungen in den jeweiligen Netzknoten i bzw. j sind;
wobei $b_{ij}$ die Suszeptanz der Stromleitung zwischen Knoten i und j ist.

Das obige Trägheitsmoment $M_i$ kann gegebenenfalls auch den Wert Null aufweisen, z.B. wenn die Masse über einen Umrichter vom Stromnetz entkoppelt ist, wie dies beispielsweise bei Windkraftanlagen mit Vollumrichter der Fall ist.

In einer weiteren Ausführungsform des erfindungsgemäßen Verfahrens basiert die Modellierung des stationären Zustands des Stromnetzes auf (an sich bekannten) Lastflussgleichungen für die in den jeweiligen Netzknoten erzeugten und verbrauchten Wirkleistungen. Gegebenenfalls kann in den Lastflussgleichungen die Bedingung berücksichtigt werden, dass der ohmsche Widerstand auf den Stromleitungen zwischen benachbarten Netzknoten (d.h. direkt über eine Stromleitung ohne Zwischenschaltung weiterer Netzknoten miteinander verbundenen Netzknoten) vernachlässigbar klein gegenüber dem Blindwiderstand auf den Stromleitungen zwischen benachbarten Netzknoten ist. Wie in der detaillierten Beschreibung dargelegt, kann diese Modellierung einer Modellierung basierend auf einem dynamischen physikalischen Modell entsprechen.

Bei der Modellierung mittels Lastflussgleichungen lautet die Lastflussgleichung für einen jeweiligen Netzknoten i vorzugsweise wie folgt:

$$P_i = \sum_{j \in N_i} \left[ u_i^2 \frac{r_{ij}}{r_{ij}^2 + x_{ij}^2} - \frac{u_i u_j}{r_{ij}^2 + x_{ij}^2} (r_{ij} \cos(\tilde{\theta}_j - \tilde{\theta}_i) + x_{ij} \sin(\tilde{\theta}_j - \tilde{\theta}_i)) \right]$$

wobei $P_i$ die am Knoten i erzeugte Wirkleistung ist;
wobei $\tilde{\theta}_i$ bzw. $\tilde{\theta}_j$ die Phase der Spannung im jeweiligen Netzknoten i bzw. j ist;
wobei $N_i$ die Menge der zu einem jeweiligen Netzknoten i benachbarten Netzknoten (d.h. direkt über eine Stromleitung ohne Zwischenschaltung weiterer Netzknoten mit dem Knoten i verbundenen Netzknoten) repräsentiert;
wobei $u_i$ bzw. $u_j$ die Effektivwerte der Spannungen in den jeweiligen Netzknoten i bzw. j sind;
wobei $r_{ij}$ der ohmsche Widerstand und $x_{ij}$ der Blindwiderstand der Stromleitung zwischen Netzknoten i und j ist.

In einer weiteren, besonders bevorzugten Ausführungsform lautet die Bedingung an den modellierten stationären Zustand, über welche das Optimierungsproblem gelöst wird, wie folgt:

$$\left\| B^T L^\dagger \omega \right\|_\infty \leq \sin(\gamma) \quad \gamma \in [0, \frac{\pi}{2}[,$$

wobei $L^\dagger$ die Pseudo-Inverse der Matrix $L = B\text{diag}(a_{ij})B^T$ ist, wobei $a_{ij} = b_{ij}u_iu_j$ ist;
wobei $u_i$ bzw. $u_j$ die Effektivwerte der Spannungen in den jeweiligen Netzknoten i bzw. j sind;
wobei $b_{ij}$ die Suszeptanz der Stromleitung zwischen Knoten i und j ist;
wobei $B^T$ die Inzidenzmatrix der Topologie des Stromnetzes ist;

$$\omega_i = p_{i0} - k_{\theta i} \frac{\sum_{i=0}^N p_{i0}}{\sum_{i=0}^N k_{\theta i}}$$

wobei $\omega = \text{vec}(\omega_i)$ mit ist und N die Anzahl der Netzknoten im Stromnetz repräsentiert;
wobei $p_{i0} = \tilde{p}_{i0} - p_{iL}$ ist;
wobei y den maximalen Phasenwert repräsentiert,
wobei das Optimierungsproblem die Minimierung von $\|B^T L^\dagger \omega\|_\infty$ in Abhängigkeit von den Referenzleistungen und Proportionalitätsfaktoren zumindest eines Teils der Proportionalregler ist.

Die obige Bedingung entspricht dabei der in der Druckschrift [4] abgeleiteten Bedingung, wobei dort $\omega_i$ als gegeben angenommen wird und nicht von $p_{i0}$ und $k_{\theta i}$ abhängt.
In einer weiteren, besonders bevorzugten Ausführungsform wird das Optimierungsproblem im Rahmen dessen Lösung in ein konvexes Optimierungsproblem gewandelt. Ein konvexes Optimierungsproblem zeichnet sich dadurch aus, dass das entsprechende Minimum, d.h. das Minimum des maximalen Phasenwerts, ein globales Minimum ist. Ein solches Optimierungsproblem kann besonders einfach und effizient mit an sich bekannten Verfahren, wie z.B. dem Innere-Punkte-Verfahren, gelöst werden.
In einer weiteren Ausgestaltung des erfindungsgemäßen Verfahrens wird bei der Lösung des Optimierungsproblems als Randbedingung berücksichtigt, dass die Referenzleistungen zumindest eines Teils der Proportionalregler in einem vorbestimmten Intervall liegen. Alternativ oder zusätzlich wird ferner die Randbedingung berücksichtigt, dass die Referenzleistungen der Proportionalitätsbeziehungen aller Netzknoten innerhalb eines vorbestimmten Schwankungsmaßes schwanken. Auf diese Weise können Unsicherheiten betreffend die Stromerzeugung bzw. die Last im Netz geeignet berücksichtigt werden.
In einer Variante des erfindungsgemäßen Verfahrens ist das Schwankungsmaß derart definiert, dass die Schwankung der Referenzleistung der Proportionalitätsbeziehung jedes Netzknotens kleiner oder kleiner gleich einem vorbestimmten Wert ist. Alternativ oder zusätzlich kann das Schwankungsmaß jedoch auch derart definiert sein, dass eine Summe und insbesondere eine gewichtete Summe der Schwankungen der Referenzleistungen der Proportionalitätsbeziehungen aller Netzknoten im Stromnetz kleiner oder gleich einem vorbestimmten Wert sind.

In einer weiteren Ausgestaltung des erfindungsgemäßen Verfahrens wird bei der Lösung des Optimierungsproblems als Randbedingung berücksichtigt, dass die sich im stationären Zustand im Stromnetz einstellende Netzfrequenz weniger als ein vorbestimmter Frequenzwert von der Nennfrequenz des Stromnetzes abweicht.

In einer weiteren Variante halten zumindest ein Teil der Netzknoten Primärregelleistungen für das Stromnetz vor, wobei aus der obigen Randbedingung, dass die sich im stationären Zustand im Stromnetz einstellende Netzfrequenz weniger als ein vorbestimmter Frequenzwert von der Nennfrequenz abweicht, eine weitere, bei der Lösung des Optimierungsproblems zu berücksichtigende Randbedingung abgeleitet wird, gemäß der die jeweiligen Primärregelleistungen kleiner oder kleiner gleich einem vorbestimmten Schwellwert sind.

In einer besonders bevorzugten Ausführungsform beschreibt das Optimierungsproblem der Erfindung die Minimierung einer Kostenfunktion, welche umso größer ist, je größer der maximale Phasenwert ist. Diese Kostenfunktion kann als einzigen Term den maximalen Phasenwert umfassen. Das Optimierungsproblem beschreibt dann die Minimierung des maximalen Phasenwerts. Ebenso kann die Kostenfunktion eine Summe aus einem Term des maximalen Phasenwerts und einem oder mehreren weiteren Termen umfassen, wobei der oder die weiteren Terme vorzugsweise derart ausgestaltet sind, dass zumindest einer der weiteren Terme umso größer ist, je größer die durch die Netzknoten eingespeiste Leistung ist und/oder je kleiner die durch die Netzknoten entnommene Leistung ist und/oder je größer die durch die Netzknoten vorgehaltene Primärregelleistung ist.

Gegebenenfalls kann das Optimierungsproblem auch die Minimierung einer Kostenfunktion beschreiben, welche von dem maximalen Phasenwert unabhängig ist, wobei als Randbedingung des Optimierungsproblems berücksichtigt wird, dass der maximale Phasenwert kleiner als ein vorgegebener Schwellwert (insbesondere kleiner als $\pi/4$) ist.

Die im Vorangegangenen beschriebenen Randbedingungen und Erweiterungen ermöglichen eine geeignete Anpassung des Optimierungsproblems an entsprechende Gegebenheiten in dem Stromnetz. Dabei können eine oder mehrere der Randbedingungen und gegebenenfalls auch alle Randbedingungen bei der Lösung des Optimierungsproblems mit einfließen.

In einer weiteren Ausführungsform des erfindungsgemäßen Verfahrens wird Schritt b) mehrmals für immer kleiner werdende vorbestimmte Frequenzwerte durchgeführt, d.h. Schritt b) wird für Randbedingungen basierend auf verschiedenen maximalen Abweichungen zwischen Netzfrequenz und Nennfrequenz wiederholt. Schritt b) wird dabei solange wiederholt, bis der sich durch die Lösung des Optimierungsproblems ergebende minimierte Maximalwert eine vorbestimmte Schwelle überschreitet, wobei der zumindest eine Teil der Proportionalregler auf die Referenzleistungen und Proportionalitätsfaktoren eingestellt wird, welche sich aus dem Schritt b) unmittelbar vor Überschreiten der vorbestimmten Schwelle ergeben. Auf diese Weise kann das Optimierungsproblem der Erfindung in geeigneter Weise mit dem Kriterium einer geringen Abweichung zwischen Netzfrequenz und Nennfrequenz kombiniert werden.

Neben dem oben beschriebenen Verfahren betrifft die Erfindung ferner eine Vorrichtung zur rechnergestützten Steuerung der Leistung in einem elektrischen Stromnetz, wobei die Vorrichtung ein oder mehrere Mittel zur Durchführung des erfindungsgemäßen Verfahrens bzw. einer oder mehrerer Varianten des erfindungsgemäßen Verfahrens aufweisen.

Die Erfindung betrifft darüber hinaus ein elektrisches Stromnetz, welches die oben beschriebene erfindungsgemäße Vorrichtung zur Steuerung der in dem Stromnetz erzeugten Leistung umfasst.

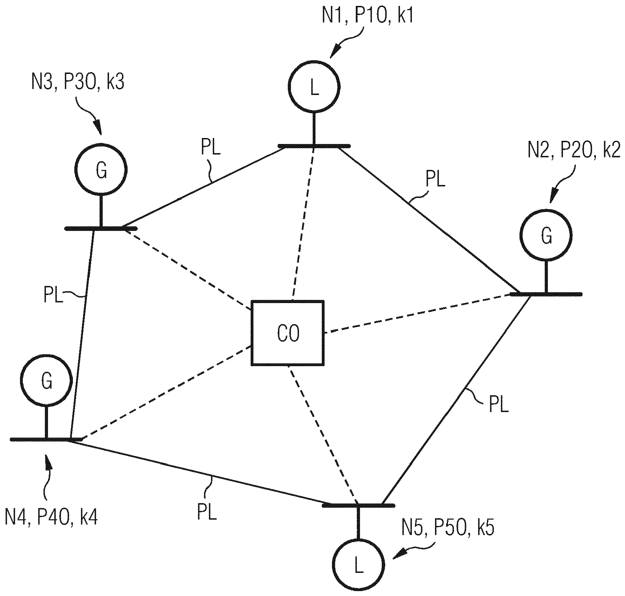

Ausführungsbeispiele der Erfindung werden nachfolgend anhand der beigefügten Fig. 1 detailliert beschrieben. Diese Figur zeigt schematisch einen Ausschnitt aus einem Stromnetz, in dem eine Ausführungsform des erfindungsgemäßen Verfahrens durchgeführt wird.

Das in Fig. 1 schematisch dargestellte Stromnetz ist ein Übertragungsnetz in der Form eines Hochspannungsnetzes, z.B. mit Hochspannungen bei 110 kV, 220 kV bzw. 380 kV. Die Erfindung ist jedoch nicht auf Hochspannungsnetze beschränkt und kann gegebenenfalls auch für Stromverteilnetze in der Form von Mittel- und Niederspannungsnetzen eingesetzt werden. Der in Fig. 1 angedeutete Ausschnitt des Stromnetzes umfasst eine Mehrzahl von über (rein induktive) Stromleitungen PL miteinander verbundenen Netzknoten N1, N2, N3, N4 und N5, wobei das Stromnetz als Ganzes eine wesentlich größere Anzahl an Netzknoten beinhaltet. Die Netzknoten können Quellen darstellen, über welche elektrische Leistung in das Stromnetz eingespeist wird, oder Senken, über welche Leistung aus dem Stromnetz entnommen wird. In Fig. 1 sind Quellen mit Bezugszeichen G (G = Generator) und Senken mit Bezugszeichen L (L = Last) bezeichnet.

Die Einspeisung von Strom in das Stromnetz erfolgt z.B. über Synchrongeneratoren, Wechselrichter oder Umrichter. Die Quellen können beispielsweise fossile Kraftwerke oder auch regenerative Energieerzeugungsanalgen in der Form von Windparks, Photovoltaikanlagen und dergleichen umfassen. Zur Entnahme von elektrischer Leistung aus dem Stromnetz werden z.B. Asynchronmaschinen, Gleichrichter und dergleichen verwendet. Ein jeweiliger Netzknoten kann auch ein Konglomerat aus mehreren Quellen und Senken repräsentieren, wobei der Netzknoten im Falle von mehr erzeugter als verbrauchter Leistung eine Quelle und ansonsten eine Senke repräsentiert.

Wie sich aus Fig. 1 ergibt, sind die Knoten N1 und N5 Senken, wohingegen die Knoten N2, N3 und N4 Quellen darstellen. In jedem der Netzknoten stellt sich eine Spannung mit einer vorbestimmten Frequenz ein, welche im Idealfall der Nennfrequenz des Stromnetzes entspricht. Diese Nennfrequenz liegt beispielsweise bei 50 Hz oder 60 Hz.

In der Ausführungsform der Fig. 1 ist eine zentrale Steuereinheit CO z.B. in einer Leitstelle vorgesehen, welche alle Knoten des Netzes überwacht und mit diesen über Kommunikationsleitungen kommunizieren kann, welche durch gestrichelte Linien angedeutet sind. Mit dieser zentralen Steuereinheit werden die Parameter in der Form der Referenzleistungen P10 bis P50 (oder einer Teilmenge davon) und der Proportionalitätsfaktoren k1 bis k5 (oder einer Teilmenge davon) von Proportionalreglern (englisch: droop controller) geeignet eingestellt, welche in den jeweiligen Knoten N1 bis N5 vorgesehen sind. Die Parameter können dabei für jeden Netzknoten unterschiedlich gewählt sein und werden im Folgenden mit $\tilde{p}_{i0}$ bzw. $k_{\theta i}$ bezeichnet. Mit den Proportionalreglern wird die im jeweiligen Knoten eingespeiste bzw. entnommene Leistung gesteuert. Ggf. können dabei auch Netzknoten vorhanden sein, für welche die Parameter $\tilde{p}_{i0}$ und $k_{\theta i}$ fest und somit nicht durch die Steuereinheit CO veränderbar sind.

Die in einem jeweiligen Netzknoten eingespeiste bzw. entnommene Leistung $\tilde{p}_i$ wird durch folgende Proportionalitätsbeziehung repräsentiert:

$$\tilde{p}_i = \tilde{p}_{i0} - k_{\theta i}\left(\dot{\tilde{\theta}}_i - \omega_0\right).$$

Dabei bezeichnet $\dot{\tilde{\theta}}_i$ die jeweilige Frequenz der Spannung in dem entsprechenden Netzknoten $i \in \mathbb{N} = \{1, \dots, N\}$ und $\omega_0 > 0$ stellt die Nennfrequenz dar. Der Parameter $\tilde{p}_{i0}$ bzw. $k_{\theta i} > 0$ repräsentieren die Referenzleistung bzw. den Proportionalitätsfaktor (auch als Gain bezeichnet). Die obige Proportionalitätsbeziehung ist für alle Netzknoten gültig, wobei für Netzknoten, welche Leistung in das Netz einspeisen, der Wert $\tilde{p}_i$ positiv ist und für Netzknoten, welche Leistung aus dem Stromnetz entnehmen, der Wert $\tilde{p}_i$ negativ ist.

Ziel des erfindungsgemäßen Verfahrens ist es nunmehr, die einstellbaren Parameter $\tilde{p}_{i0}$ und $k_{\theta i}$ der entsprechenden Netzknoten optimal im Hinblick auf die Stabilität bzw. Robustheit des Stromnetzes festzulegen. Zur Implementierung des erfindungsgemäßen Verfahrens wird ein Optimierungsproblem rechnergestützt in der Steuereinheit CO gelöst, wobei das Optimierungsproblem auf einem dynamischen physikalischen Modell beruht, welches den Zeitverlauf der Phasen der Spannungen in den Netzknoten in Abhängigkeit von Parametern des Stromnetzes beschreibt. In der nachfolgend beschriebenen Ausführungsform wird als dynamisches physikalisches Modell ein physikalisches Schwingungsgleichungssystem verwendet, welches aus einer Vielzahl von gekoppelten Differentialgleichungen besteht, wobei eine jeweilige Differentialgleichung den Zeitverlauf der Spannungsphase eines entsprechenden Netzknotens aus dem Stromnetz repräsentiert. Dieses Differentialgleichungssystem lautet wie folgt:

$$M_i\ddot{\tilde{\theta}}_i + k_{\theta i}\dot{\tilde{\theta}}_i = k_{\theta i}\omega_0 + \tilde{p}_{i0} - p_{iL} - \sum_{j \in N_i} b_{ij} u_i u_j \sin\left(\tilde{\theta}_i - \tilde{\theta}_j\right) \qquad (1).$$

Dabei bezeichnet $M_i$ das mechanische Trägheitsmoment der jeweiligen Netzknoten, welches bei einem direkt an das Stromnetz gekoppelten Generator bzw. Motor dem Trägheitsmoment dieses Generators bzw. Motors entspricht. Erfolgt die Kopplung des Generators bzw. Motors an das Stromnetz unter Zwischenschaltung eines Umrichters, wie es beispielsweise bei Windkraftanlagen der Fall ist, weist dieses Trägheitsmoment den Wert 0 auf. Die Größe $\tilde{\theta}_i$ stellt die Phase der Spannung im entsprechenden Netzknoten i dar. Über den Index j werden die Nachbarn des entsprechenden Knotens i repräsentiert, wobei $N_i$ der Menge der Nachbarn des Knotens i entspricht. Ferner bezeichnet $p_{iL}$ *die* lokale Last in jedem Knoten i. Dabei können gegebenenfalls auch isolierte passive Lasten im Stromnetz berücksichtigt werden, indem diese Lasten auf verschiedene Netzknoten basierend auf der an sich bekannten Kron-Reduktion verteilt werden. Der Parameter $b_{ij}$ stellt den Blindleitwert (auch als Suszeptanz bezeichnet) der Stromleitung zwischen Knoten i und j dar und $u_i$ bzw. $u_j$ repräsentieren die Effektivwerte der Spannungen in den Knoten i bzw. j. Zwecks einfacher Notation wird die Definition $p_{i0} = \tilde{p}_{i0} - p_{iL}$ eingeführt. $p_{i0}$ entspricht dabei der in einem Netzknoten eingespeisten bzw. entnommenen Leistung bei Nennfrequenz im Sinne von Anspruch 1.

Zur Formulierung des Optimierungsproblems wird das System in ein rotierendes Koordinatensystem transformiert, welches mit der sich im stationären Zustand des Stromnetzes einstellenden Netzfrequenz $\Omega$ rotiert. Im stationären Zustand ist dabei die Summe der in das Netz eingespeisten und aus dem Netz entnommenen Leistung gleich Null, d.h. es gilt:

$$\sum_{i=1}^{N} \sum_{j \in N_i} b_{ij} u_i u_j \sin\left(\tilde{\theta}_i^* - \tilde{\theta}_j^*\right) = 0 \qquad (2).$$

Dabei bezeichnet $\tilde{\theta}_i^* - \tilde{\theta}_j^*$ die konstante Differenz zwischen der Phase $\tilde{\theta}_i$ des Knotens i und der Phase $\tilde{\theta}_j$ des Nachbarknotens j im stationären Zustand. Unter Verwendung der Gleichung (1) ergibt sich hieraus:

$$\sum_{i=1}^{N} k_{\theta i}\Omega = \sum_{i=1}^{N}(k_{\theta i}\omega_0 + p_{i0}) \qquad (3).$$

Hieraus folgt wiederum:

$$\Omega = \omega_0 + \frac{\sum_{i=1}^{N} p_{i0}}{\sum_{i=1}^{N} k_{\theta i}} \qquad (4).$$

Die Transformation in das mit der Frequenz $\Omega$ rotierende Koordinatensystem lautet wie folgt:

$$\theta_i = \tilde{\theta}_i - \Omega t,$$

$$\dot{\theta}_i = \dot{\tilde{\theta}}_i - \Omega,$$

und

$$\ddot{\theta}_i = \ddot{\tilde{\theta}}_i.$$

Hieraus erhält man:

$$M_i\ddot{\theta}_i + k_{\theta i}\dot{\theta}_i = p_{i0} - k_{\theta i}\frac{\sum_{i=1}^{N} p_{i0}}{\sum_{i=1}^{N} k_{\theta i}} - \sum_{j\in N_i} b_{ij}u_i u_j \sin(\theta_i - \theta_j) \qquad (5),$$

$$M_i\ddot{\theta}_i + k_{\theta i}\dot{\theta}_i = \omega_i(k_\theta, p_0) - \sum_{j\in N_i} a_{ij}\sin(\theta_i - \theta_j) \qquad (6).$$

Dabei gilt:

$$a_{ij} = b_{ij}u_i u_j$$

und

$$\omega_i(k_\theta, p_0) = p_{i0}\frac{\sum_{i=1}^{N} p_{i0}}{\sum_{i=1}^{N} k_{\theta i}} \qquad (7).$$

Die Größe $\omega_i(k_\theta, p_0)$ repräsentiert dabei die Eigenfrequenz und hängt von den Proportionalitätsfaktoren $k_\theta = \mathrm{vec}(k_{\theta i})$ und den Referenzleistungen $p_0 = \mathrm{vec}(p_{i0})$ ab. Zwecks einfacher Notation wird oft der Ausdruck $\omega_i$ verwendet, wenn das Argument $k_\theta p_0$ nicht wichtig ist. Es gilt dabei $\sum_{i=1}^{N} \omega_i(k_\theta, p_0) = 0$ für alle $k_\theta$ und $p_0$.

In der bereits oben erwähnten Druckschrift [4] wurde der stationäre Zustand der Differentialgleichung (6) untersucht. In diesem Zustand gilt $\ddot{\theta}_i = 0$ und $\dot{\theta}_i = 0$ Somit ist der stationäre Zustand durch jeweilige Spannungsphasen $\theta_i^*, i \in \mathbb{N}$ repräsentiert, welche folgende Bedingung erfüllen:

$$0 = \omega_i(k_\theta, p_0) - \sum_{j\in N_i} a_{ij} \sin(\theta_i^* - \grave{e}_j^*) \qquad (8).$$

Die obige Gleichung (8) kann in kompakter Form wie folgt geschrieben werden:

$$\omega = B\,\mathrm{diag}(a_{ij})\sin(B^T\theta^*) \qquad (9),$$

wobei $B^T$ die an sich bekannte Inzidenzmatrix der Topologie des Stromnetzes bezeichnet und $\omega = \mathrm{vec}(\omega_i)$ sowie $\theta^* = \mathrm{vec}(\theta_i^*)$ gilt.

Im Vorangegangenen wurde der stationäre Zustand der Stromnetzes gemäß den Gleichungen (8) bzw. (9) basierend auf einem dynamischen physikalischen Modell beschrieben. Analog kann der stationäre Zustand auch mittels an sich bekannter Lastflussgleichungen modelliert werden, wie im Folgenden erläutert wird. Man geht dabei davon aus, dass die Stromleitung zwischen zwei benachbarten Netzknoten i und j im Stromnetz durch die serielle komplexwertige Impedanz $z_{ij} = r_{ij} + j_m x_{ij}$ und die Shunt-Kapazität $b_{ij}^c$ beschrieben wird, wobei letztere gleichmäßig zwischen den benachbarten Knoten aufgeteilt ist. $r_{ij}$ wird üblicherweise als ohmscher Widerstand (oder Wirkwiderstand) und $x_{ij}$ als Blindwiderstad (oder Reaktanz) bezeichnet. Die Größe $j_m$ bezeichnet die komplexe Einheit, welche häufig auch nur mit j bezeichnet wird, jedoch hier zur Unterscheidung zu den Indizes j der Knoten als $j_m$ benannt ist. Die komplexe Spannung des Knotens i ist dabei gegeben durch $\underline{u}_i = u_i\exp(j_m\tilde{\theta}_i)$. Analog ist die komplexe Spannung des Knotens j gegeben durch $\underline{u}_j = u_j\exp(j_m\tilde{\theta}_j)$. Die Spannungen $u_i$ und $u_j$ sowie die Phasen $\tilde{\theta}_i$ und $\tilde{\theta}_j$ wurden bereits im Vorangegangenen in Zusammenhang mit Gleichung (1) definiert. Der komplexe Strom $\underline{i}_{ij}$, der von dem Knoten i zum Knoten j fließt, ergibt sich aus den obigen Spannungen und der Impedanz wie folgt:

$$\underline{i}_{ij} = (\underline{u}_i - \underline{u}_j)/z_{ij} \qquad (101)$$

Wie an sich bekannt, ist die Scheinleistung $S_{ij}$, die von dem Knoten i zu dem Knoten j fließt, wie folgt gegeben:

$$S_{ij} = P_{ij} + j_m Q_{ij} = \underline{u}_i \underline{i}_{ij}^* \qquad (102)$$

$P_{ij}$ bezeichnet dabei die Wirkleistung, die vom Knoten i zum Knoten j fließt. Analog entspricht $Q_{ij}$ der Blindleistung, die vom Knoten i zum Knoten j fließt. $\underline{i}_{ij}^*$ ist der konjugiert komplexe Wert von $\underline{i}_{ij}$.

Dies führt zu den Wechselstrom-Lastflussgleichungen für das Stromnetz aus N Knoten:

$$S_i = P_i + j_m Q_i = \sum_{j\in N_i} S_{ij} = \sum_{j\in N_i}\left[\frac{\underline{u}_i(\underline{u}_i^* - \underline{u}_j^*)}{z_{ij}^*} - \frac{\underline{u}_i\underline{u}_i^* j_m b_{ij}}{2}\right] \qquad (103)$$

$$P_i = \sum_{j\in N_i}\left[u_i^2 \frac{r_{ij}}{r_{ij}^2 + x_{ij}^2} - \frac{u_i u_j}{r_{ij}^2 + x_{ij}^2}(r_{ij}\cos(\tilde{\theta}_j - \tilde{\theta}_i) + x_{ij}\sin(\tilde{\theta}_j - \tilde{\theta}_i))\right] \qquad (104)$$

$$Q_i = \sum_{j\in N_i}\left[u_i^2\left(\frac{x_{ij}}{r_{ij}^2 + x_{ij}^2} - \frac{b_{ij}^c}{2}\right) - \frac{u_i u_j}{r_{ij}^2 + x_{ij}^2}(x_{ij}\cos(\tilde{\theta}_j - \tilde{\theta}_i) - r_{ij}\sin(\tilde{\theta}_j - \tilde{\theta}_i))\right] \qquad (105)$$

Dabei wird über alle Knoten j summiert, die benachbart zum Knoten i sind. $S_i$ bezeichnet die am Knoten i generierte Scheinleistung, $P_i$ die am Knoten i generierte Wirkleistung und $Q_i$ die am Knoten i generierte Blindleistung. Verbrauchte Wirk- und Blindleistungen werden durch negative $P_i$ und $Q_i$ modelliert.

Es wird ferner angenommen, dass der Wirkwiderstand zwischen den Knoten i und j vernachlässigbar klein gegenüber der Reaktanz zwischen den Knoten i und j ist, d.h. $r_{ij} \ll x_{ij}$ Dies bedeutet, dass die ohmschen Verluste auf den Stromleitungen vernachlässigt werden können. Mittels dieser Annahme ergibt sich folgende vereinfachte Formel für die Wirkleistung $P_i$:

$$P_i = -\sum_{j \in N_i} \left( \frac{u_i u_j}{x_{ij}} \sin(\tilde{\theta}_j - \tilde{\theta}_i) \right). \qquad (106)$$

Da $r_{ij} \ll x_{ij}$, gilt $b_{ij} = 1/x_{ij}$.

Somit kann obige Gleichung (106) auch wie folgt geschrieben werden:

$$P_i = -\sum_{j \in N_i} \left( b_{ij} u_i u_j \sin(\tilde{\theta}_j - \tilde{\theta}_i) \right). \qquad (107)$$

$P_i$ ergibt sich aus der bereits oben genannten Proportionalitätsbeziehung wie folgt:

$$P_i = \tilde{p}_{i0} - p_{iL} = p_{i0} - k_{\theta i}(\dot{\tilde{\theta}}_i - \omega_0). \qquad (108)$$

Es gilt somit:

$$P_i = p_{i0} - k_{\theta i}(\dot{\tilde{\theta}}_i - \omega_0) = -\sum_{j \in N_i} \left( b_{ij} u_i u_j \sin(\tilde{\theta}_j - \tilde{\theta}_i) \right) \qquad (109)$$

Im stationären Zustand des Stromnetzes ist $\dot{\tilde{\theta}}_i$ für alle Knoten des Stromnetzes gleich groß, d.h. es gilt $\dot{\tilde{\theta}}_i = \Omega$ für alle $i \in \mathbb{N}$. Ferner ist im stationären Zustand die Summe der in das Netz eingespeisten und aus dem Netz entnommenen Wirkleistung gleich Null, d.h. es ergibt sich mit Hilfe obiger Gleichung (109) :

$$\sum_{i=1}^{N} P_i = \sum_{i=1}^{N} (p_{i0} - k_{\theta i}(\dot{\tilde{\theta}}_i - \omega_0)) = -\sum_{i=1}^{N} \sum_{j \in N_i} \left( b_{ij} u_i u_j \sin(\tilde{\theta}_j - \tilde{\theta}_i) \right) = 0 \qquad (110)$$

Dies entspricht der obigen Gleichung (2).

Über die in Gleichung (110) enthaltene Beziehung

$$\sum_{i=1}^{N} (p_{i0} - k_{\theta i}(\dot{\tilde{\theta}}_i - \omega_0)) = 0 \qquad (111)$$

erhält man schließlich $\Omega$, indem man $\dot{\tilde{\theta}}_i = \Omega$ in diese Beziehung einsetzt und nach $\Omega$ auflöst. Hieraus ergibt sich der gleiche Wert für $\Omega$ wie in obiger Gleichung (4). Indem man diesen Wert von $\Omega$ in obige Gleichung (109) für $\dot{\tilde{\theta}}_i$ einsetzt, erhält man schließlich wiederum die Gleichung (8), welche den stationären Zustand repräsentiert. Demzufolge führt die Modellierung des stationären Zustands über die soeben beschriebene Lastflussrechnung mittels der obigen Lastflussgleichungen zu dem gleichen Ergebnis wie die Modellierung des stationären Zustands über das oben erläuterte dynamische physikalische Modell.

Basierend auf der obigen Bedingung gemäß den Gleichungen (8) bzw. (9) wird das Verfahren fortgesetzt. In der Druckschrift [4] wurde dabei gezeigt, dass ein stationärer Zustand $\theta^*$ existiert, so dass für alle benachbarten Netzknoten i,j $|\theta_i^* - \theta_j^*| \le \gamma$ gilt, falls folgende Bedingung erfüllt ist:

$$\left\| B^T L^\dagger \omega \right\|_\infty \le \sin(\gamma), \gamma \in \left[ 0, \frac{\pi}{2} \right[ \qquad (10).$$

$L^\dagger$ repräsentiert die Pseudoinverse der Laplace-Matrix $L = B\mathrm{diag}(a_{ij})B^T$ des Stromnetzes. Die obige Gleichung (10) entspricht der Gleichung (17) aus Druckschrift [4], wobei dort $\omega_i$ als gegeben angenommen wird und nicht von $p_0$ und $k_\theta$ abhängt.

Basierend auf der obigen Bedingung gemäß Gleichung (10) wird nunmehr das Minimum der Unendlich-Norm gemäß dem linken Teil aus Gleichung (10) gesucht, was wiederum der Minimierung der maximalen Phasendifferenz $\gamma$ entspricht, die auf Stromleitungen zwischen benachbarten Knoten auftreten kann. Im Rahmen des Optimierungsproblems wird somit nach entsprechenden Parametern $k_{\theta i}$ und $p_{i0}$ gesucht, so dass $\gamma$ klein wird. Ein kleiner Wert von $\gamma$ garantiert kleinen Phasendifferenzen im stationären Zustand, was wiederum zu einem Stromnetz führt, das robust gegenüber Lastvariationen ist.

Bei der Lösung des oben beschriebenen Optimierungsproblems wird berücksichtigt, dass nicht alle Parameter $k_{\theta i}$ und $p_{i0}$ im Netz eingestellt werden können. Im Folgenden werden Knoten, deren Parameter $k_{\theta i}$ und $p_{i0}$ manipuliert werden können, mit der Indexmenge $N_K$ für $k_{\theta i}$ und mit der Indexmenge $N_p$ für $p_{i0}$ bezeichnet, d.h. $k_{\theta i}, i \in N_K$ und $p_{i0}, i \in N_p$ können in dem Stromnetz manipuliert werden. Zwecks einfacher Notation und ohne Beschränkung der Allgemeinheit wird angenommen, dass $p_o = [p_t^T p_n^T]^T$ in einstellbare Parameter $p_t$ und nicht-einstellbare Parameter $p_n$ separiert werden kann. Die zulässigen Sätze von einstellbaren Parametern $k_\theta$ und $p_0$ lauten somit wie folgt:

$$K = \left\{ k_\theta \in \mathbb{R}_+^N : k_{\theta i}^0, \forall i = \overline{N_K} = N \setminus N_K \right\} \qquad (11),$$

$$P_T = \left\{ p_t \in \mathbb{R}^{|N_P|} \right\} \qquad (12),$$

wobei $k_{\theta i}^0 > 0$ und $p_n$ als nicht-einstellbare Parameter vorgegeben sind und $\mathbb{R}_+^N$ einen N-dimensionalen Vektor mit ausschließlich positiven Elementen repräsentiert. $\mathbb{R}$ bezeichnet dabei die Menge der reellen Zahlen. Zur Lösung des Optimierungsproblems wird unter anderem folgende Randbedingung berücksichtigt:

$$\underline{p_t} \leq p_t \leq \overline{p_t} \qquad (13),$$

wobei durch $\underline{p_t}, \overline{p_t} \in \mathbb{R}^{|N_P|}$ eine obere und untere Grenze für die Referenzleistungen der entsprechenden Proportionalregler festgelegt wird.

Ferner werden als Randbedingung Unsicherheiten bei der Einspeisung bzw. Entnahme von elektrischer Leistung berücksichtigt. Diese Unsicherheiten werden durch Änderungen von $p_{i0}$ in Gleichung (1) berücksichtigt. Es wird dabei angenommen, dass alle $p_{i0}$ innerhalb eines vorbestimmten Intervalls liegen, d.h., dass gilt:

$$p_0 = \binom{p_t}{p_n} + \Delta p_0 \qquad (14a),$$

$$|\Delta p_0| \leq \overline{\Delta p_0} \qquad (14b).$$

Dabei bezeichnet $p_t \in P_T$ die einstellbaren Referenzleistungen und $p_n$ repräsentiert die (nicht-einstellbaren) Referenzleistungen. Mit $\Delta p_0 \in \mathbb{R}^N$ werden entsprechende unbekannte Unsicherheiten berücksichtigt, welche durch den Grenzwert $\overline{\Delta p_0} \in \mathbb{R}_+^N$ begrenzt sind. Es werden hier symmetrische Intervalle angenommen, wobei ähnliche Ergebnisse auch für nicht-symmetrische Intervalle abgeleitet werden können. Gemäß der obigen Berücksichtigung von Unsicherheiten basierend auf Gleichungen (14a) und (14b) wird für jeden Parameter $p_t$ bzw. $p_n$ eine maximale Schwankung festgelegt. Alternativ können die Unsicherheiten jedoch auch wie folgt definiert werden:

$$p_0 = \binom{p_t}{p_n} + \Delta p_0 \qquad (15a),$$

$$\sum_{i=1}^{N} \frac{1}{\overline{\Delta p_{i0}}} |\Delta p_{i0}| \leq 1 \qquad (15b).$$

Der Unterschied besteht darin, dass die Unsicherheiten gemäß Gleichungen (14a) und (14b) die Unendlich-Norm berücksichtigen, d.h. alle Elemente von $\Delta p_0$ können gleichzeitig die maximale Schwankung aufweisen. Demgegenüber wird bei der Berücksichtigung der Unsicherheiten gemäß Gleichungen (15a) und (15b) eine gewichtete 1-Norm zu Grunde gelegt, d.h. nicht alle Elemente von $\Delta p_0$ können gleichzeitig die jeweilige maximale Schwankung aufweisen. Die 1-Norm Gewichte $\overline{\Delta p_{i0}}$ sind hierbei bekannte Größen, die die Unsicherheiten begrenzen. Der zweite Fall ist dabei realistischer, da in der Regel nicht alle eingespeisten Leistungen bzw. Lasten gleichzeitig bis zum Maximalwert schwanken.

Es werden folgende Unsicherheitsmengen definiert:

$$P_U^{\infty}(\overline{\Delta p_o}) = \{\Delta p_0 \in \mathbb{R}^N : |\Delta p_0| \leq \overline{\Delta p_o}\} \qquad (16),$$

$$P_U^1(\overline{\Delta p_0}) = \left\{\Delta p_0 \in \mathbb{R}^N : \sum_{i=1}^{N} \frac{1}{\overline{\Delta p_0}} |\Delta p_0| \leq 1\right\} \qquad (17).$$

Aus Übersichtlichkeitsgründen wird das Argument $\overline{\Delta p_o}$ von $P_U^{\infty,1}$ weggelassen.

Durch Umschreiben der obigen Gleichung (7) in Vektorform erhält man:

$$\omega(k_\theta, p_0) = p_0 - \frac{\mathbf{1}^T p_0}{\mathbf{1}^T k_\theta} k_\theta \qquad (18).$$

Um nunmehr $\gamma$ zu minimieren, muss die Unendlich-Norm aus Gleichung (10) minimiert werden. Dabei hängen sowohl $B$ als auch $L$ nicht von $k_\theta$ und $p_0$ ab.

Das heißt, das Optimierungsproblem lautet wie folgt:

$$\min_{\substack{k_\theta \in K \\ p_t \in P_T}} \max_{\Delta p_0 \in P_U^{\infty,1}} \left\| B^T L^\dagger \left( p_0 - \mathbf{1}^T p_0 \frac{k_\theta}{\mathbf{1}^T k_\theta} \right) \right\|_\infty \qquad (19).$$

Die Minimierung gemäß Gleichung (19) garantiert, dass die Wahl der einstellbaren Parameter der Proportionalregler insgesamt ein stabiles Stromnetz bereitstellt und die Robustheit in Bezug auf Lastvariationen erhöht.

Zusätzlich wird in der hier beschriebenen Ausführungsform als Randbedingung eine Grenze für die Abweichung der Netzfrequenz im stationären Zustand von der Nennfrequenz berücksichtigt. Es wird somit $|\Omega - \omega_0| \leq \Delta\Omega$ gefordert, d.h. es gilt folgende Randbedingung:

$$\left| \frac{\mathbf{1}^T p_0}{\mathbf{1}^T k_\theta} \right| \leq \Delta\Omega \qquad (20).$$

Die Grenze $\Delta\Omega$ ermöglicht die Begrenzung der Primärregelleistung von jedem Knoten, der Leistung einspeist oder entnimmt, unter Verwendung der folgenden Beschränkung:

$$\Delta\Omega k_\theta \leq \Delta r \qquad (21).$$

Dabei ist die Größe $\Delta r \in \mathbb{R}_+^N$ ein Vektor, der die obere Grenze der Primärregelleistung für jeden Knoten festlegt. Auch diese Randbedingung fließt bei der Lösung des Optimierungsproblems gemäß der beschriebenen Ausführungsform mit ein. Zwecks einfacherer Notation wird angenommen, dass die Primärregelleistung symmetrisch um den Wert der nominell eingespeisten oder entnommenen Leistung ist, d.h. jeder Netzknoten kann die gleiche Menge an positiver und negativer Primärregelleistung bereitstellen.

Darüber hinaus können in der obigen Kostenfunktion (19) die entstehenden Kosten für die eingespeiste Leistung dem Nutzen der entnommenen Leistung bei Nennfrequenz mithilfe eines zusätzlichen Kostenterms

$$c_p^T \begin{pmatrix} p_t \\ p_n \end{pmatrix} \qquad (22)$$

gegengerechnet werden, wobei $c_p$ der Vektor der Kosten und Nutzen $c_{pi}$ ist. Dabei gilt in der Regel, dass die Kosten $c_{pi}$ für einen Generatorknoten i mit $p_{i0} > 0$ positiv sind, d.h. die Erzeugungskosten $c_{pi}p_{i0}$ steigen mit zunehmender Erzeugungsleistung. Ebenso ist der Nutzen $c_{pi}$ für einen Lastknoten i mit $p_{i0} < 0$ normalerweise positiv, d.h. Gesamtkosten $c_p^T p_0$ sinken, falls der Lastknoten mehr Leistung aufnehmen kann, weil in diesem Fall $c_{pi}p_{i0} < 0$ gilt. Analog hierzu können die Kosten für die bei Bedarf bereitgestellte Primärregelleistung durch den Kostenterm

$$c_k^T k_\theta \qquad (23)$$

berücksichtigt werden. Im Folgenden wird die Optimierung unter Berücksichtigung der Terme (22) und (23) beschrieben, welche in diesem Fall Bestandteil der Kostenfunktion sind (siehe Gleichungen (24a) und (25a)).

Die Optimierung der Kostenfunktion (19) unter Verwendung von (22) und (23) mit den Randbedingungen (13), (20) und (21) stellt einen Kompromiss zwischen einem kostengünstigen Betrieb des Netzes, der Stabilität des Stromnetzes, der Abweichung der Netzfrequenz von der Nennfrequenz und den Grenzen von bereitstellbarer Referenz- und Primärregelleistung dar.

Im Rahmen der Lösung des Optimierungsproblems wird das nichtkonvexe Min-Max-Problem gemäß den Gleichungen (19), (22), (23), (13), (20) und (21) in ein konvexes Optimierungsproblem transformiert. Hierzu werden zunächst die normalisierten Proportionalitätsfaktoren k derart definiert, dass $\mu k_\theta = k$ gilt, wobei $\mu = \frac{1}{\mathbf{1}^T k_\theta} > 0$ gilt, so dass $\mathbf{1}^T k = 1$. Ferner wird definiert $\eta = \mathbf{1}^T p_0$. Somit kann die obige Gleichung (20) umgeschrieben werden zu $\mu|\eta| \leq \Delta\Omega$. Schließlich werden die Parameter $p_t$ so festgelegt, dass gilt $\mathbf{1}^T p_t = -\mathbf{1}^T p_n$, d.h. $\Omega = \omega_0$, falls $\Delta p_0 = 0$.

Zusammen mit den obigen Gleichungen (14a), (14b) und (15a), (15b) kann das Optimierungsproblem dann wie folgt geschrieben werden:

$$\min_{\substack{k>0 \\ \mu>0 \\ p_t \in P_T}} \left( \alpha c_p^T \begin{pmatrix} p_t \\ p_n \end{pmatrix} + \tilde{\beta} c_k^T k_\theta + \max_{\Delta p_0 \in P_U^{\infty,1}} \left\| B^T L^\dagger \left( \begin{pmatrix} p_t \\ p_n \end{pmatrix} + \Delta p_0 - \eta k \right) \right\|_\infty \right) \qquad (24a)$$

mit den Randbedingungen:

$$\mathbf{1}^T k = 1 \qquad (24b),$$

$$\mathbf{1}^T p_t = -\mathbf{1}^T p_n \qquad (24c),$$

$$\mathbf{1}^T \Delta p_0 = \eta \qquad (24d),$$

$$\mu|\eta| \leq \Delta\Omega \qquad (24e),$$

$$\underline{p_t} \leq p_t \leq \overline{p_t} \qquad (24f),$$

$$\Delta\Omega k \leq \mu\Delta r \qquad (24g),$$

$$k_i = \mu k_{\theta i}^0, \forall i \in \overline{N_K} \qquad (24h).$$

Hierbei geben die konstanten Gewichte $\alpha$ und $\tilde{\beta}$ die Verhältnisse zwischen den verschiedenen Kostenanteilen wieder.

Die letzte Randbedingung garantiert, dass diejenigen Proportionalitätsfaktoren, welche nicht eingestellt werden können, auf den Wert $k_{\theta i}^0$ festgelegt werden. Das Optimierungsproblem gemäß den Gleichungen (24a) bis (24h) ist ein Min-Max-Problem, welches eine weitere Umformulierung erfordert.

Für die Unsicherheit gemäß den obigen Gleichungen (14a) und (14b) erhält man $\eta \leq \mathbf{1}^T\overline{\Delta p_0}$ und $\eta = \mathbf{1}^T\overline{\Delta p_0}$ für die Grenzwerte. Für die Unsicherheit gemäß obigen Gleichungen (15a) und (15b) erhält man $\eta = \mathbf{1}^T\overline{\Delta p_0} \leq max_i\overline{\Delta p_{i0}}$ und $\eta = max_i\overline{\Delta p_{i0}}$ für die Grenzwerte. Somit kann die Gleichung (24e) ersetzt werden durch $\mu\mathbf{1}^T\overline{\Delta p_0} \leq \Delta\Omega$ oder $\mu max_i\overline{\Delta pi_0} \leq \Delta\Omega$, je nachdem, ob die Unsicherheiten gemäß Gleichungen (14a) und (14b) bzw. gemäß Gleichungen (15a) und (15b) betrachtet werden. Ersetzt man $\eta$ in der obigen Kostenfunktion (24a) unter Verwendung von Gleichung (24d), sind die Randbedingungen für die Maximierung nicht mehr relevant, sondern nur noch für die Minimierung. Somit kann das Maximierungsproblem explizit gelöst werden. Für die Unsicherheiten gemäß den Gleichungen (14a) und (14b) lautet das Optimierungsproblem dabei wie folgt:

$$\min_{\substack{k>0 \\ \mu>0 \\ p_t\in P_T}} \left( \alpha c_p^T \begin{pmatrix} p_t \\ p_n \end{pmatrix} + \beta c_k^T k + \left\| \left| B^T L^\dagger \begin{pmatrix} p_t \\ p_n \end{pmatrix} \right| + \left| B^T L^\dagger (I - k\mathbf{1}^T) \right| \overline{\Delta p_0} \right\|_\infty \right) \qquad (25a)$$

mit den Randbedingungen:

$$\mathbf{1}^T k = 1 \qquad (25b),$$

$$\mathbf{1}^T p_t = -\mathbf{1}^T p_n \qquad (25c),$$

$$\mu\mathbf{1}^T\overline{\Delta p_0} \leq \Delta\Omega \qquad (25d),$$

$$\underline{p_t} \leq p_t \leq \overline{p_t} \qquad (25e),$$

$$\Delta\Omega k \leq \mu\Delta r \qquad (25f),$$

$$k_i = \mu k_{\theta i}^0, \forall i \in \overline{N_K} \qquad (25g).$$

Hierbei wurde das Gewicht $\tilde{\beta}$ in Gleichung (24a) durch $\beta \approx \frac{\tilde{\beta}}{\mu}$ in Gleichung (25a) ersetzt, um eine Kostenfunktion zu erhalten, die konvex in den Optimierungsvariablen ist.

Für die Unsicherheiten gemäß den Gleichungen (15a) und (15b) kann das Optimierungsproblem wie folgt geschrieben werden:

$$\min_{\substack{k>0 \\ \mu>0 \\ p_t \in P_T}} \left( \alpha c_p^T \begin{pmatrix} p_t \\ p_n \end{pmatrix} + \beta c_k^T k + \right.$$

$$\left. \left\| \left| B^T L^\dagger \begin{pmatrix} p_t \\ p_n \end{pmatrix} \right| \right| + \left\| \left| B^T L^\dagger (I - k\mathbf{1}^T) \right| \mathrm{diag}(\overline{\Delta p_0}) \right\|_{\mathrm{row,max}} \right\|_\infty \right) \qquad (26a)$$

mit den Randbedingungen:

$$\mathbf{1}^T k = 1 \qquad (26b) ,$$

$$\mathbf{1}^T p_t = -\mathbf{1}^T p_n \qquad (26c) ,$$

$$\mu \, max_i \overline{p_{i0}} \le \Delta\Omega \qquad (26d) ,$$

$$\underline{p_t} \le p_t \le \overline{p_t} \qquad (26e) ,$$

$$\Delta\Omega k \le \mu\Delta r \qquad (26f) ,$$

$$k_i = \mu k_{\theta i}^0, \forall i \in \overline{N_K} \qquad (26g) .$$

Hierbei wurde wieder das Gewicht $\tilde{\beta}$ in Gleichung (24a) durch $\beta \approx \dfrac{\tilde{\beta}}{\mu}$ in Gleichung (26a) ersetzt. Dabei bezeichnet $\|Q\|_{row,max}$ die Maximalnorm der Zeilen der Matrix Q, d.h. es gilt:

$$\left\| \begin{pmatrix} q_1^T \\ \vdots \\ q_n^T \end{pmatrix} \right\|_{row,max} = \mathrm{vec}\left( \left\| q_i^T \right\|_\infty \right) \qquad (27) .$$

Die obigen Optimierungsprobleme sind nunmehr konvex und können somit in geeigneter Weise mit an sich bekannten Lösungsverfahren, wie z.B. dem Innere-Punkte-Verfahren, gelöst werden.

Als alternative Ausführungsform zu den in Gleichung (25) und (26) beschriebenen Optimierungsproblemen können auch einzelne Summanden der Kostenfunktion als Randbedingungen formuliert werden. Beispielsweise kann die Unendlich-Norm, die die maximale Phasendifferenz benachbarter Knoten minimiert, als Randbedingung verwendet werden, um die Erzeugungskosten unter der Vorgabe zu minimieren, dass der maximale Phasenwinkel kleiner als ein vorgegebener, fester Wert ist.

Die im Vorangegangenen beschriebene Optimierung wird im Stromnetz in vorbestimmten Zeitabständen durchgeführt, d.h. in bestimmten Zeitabständen werden von der Steuereinheit CO aktualisierte Werte der Parameter der entsprechenden Proportionalregler an die relevanten Netzknoten gegeben, d.h. es wird ein aktualisierter Wert dieser Parameter in den Netzknoten eingestellt. Ein Kriterium, wonach eine Aktualisierung der Parameter durchgeführt wird, kann beispielsweise dadurch festgelegt sein, dass eine Abweichung zwischen der Netzfrequenz und der Nennfrequenz eine vorbestimmte Schwelle überschreitet.

In einer weiteren Ausführungsform besteht ferner die Möglichkeit, dass zu einem entsprechenden Zeitpunkt das Optimierungsproblem mehrere Male für eine abnehmende Abweichung $\Delta\Omega$ zwischen Netzfrequenz und Nennfrequenz als Randbedingung durchgeführt wird, bis der maximale Phasenwert $\gamma$ zu groß wird, d.h. eine vorbestimmte Schwelle überschreitet. Die entsprechenden Werte der Referenzleistungen und Proportionalitätsfaktoren vor Überschreiten dieser Schwelle werden dann zur Einstellung der Proportionalitätsregler verwendet.

Die im Vorangegangenen beschriebenen Ausführungsformen des erfindungsgemäßen Verfahrens weisen eine Reihe von Vorteilen auf. Insbesondere werden durch die Lösung eines Optimierungsproblems entsprechende Parameter von Proportionalreglern in einem Stromnetz im Hinblick auf Kosteneffizienz, Stabilität und Robustheit des Netzes sowie einem geringen Unterschied zwischen Netzfrequenz und Nennfrequenz eingestellt. Dabei wird zur Formulierung des Optimierungsproblems eine analytische Bedingung als ein Maß für die Stabilität und Robustheit des Netzes verwendet. Im erfindungsgemäßen Verfahren können in Echtzeit durch die Lösung des Optimierungsproblems geeignete Parameter für die Proportionalregler im Stromnetz bestimmt werden, ohne dass eine zeitaufwändige rekursive Neuentwurf- und Stabilitäts-Analyse basierend auf Simulationen des Stromnetzes durchgeführt werden muss.

Literaturverzeichnis:

[1] J. W. Simpson-Porco, F. Dörfler, and F. Bullo. Droop-Controlled Inverters are Kuramoto Oscillators. http://arxiv.org/pdf/1206.5033v1.pdf, 2012.

[2] A. Hoballah and I. Erlich. Dynamic Stability and Network Constrained Optimal Spinning Reserve Allocation. Proc. IEEE Power and Energy Soc. General Meeting, 2011, Seiten 1-5.

[3] Peter W. Sauer, M. A. Pai; Power System Dynamics and Stability; Stipes Publishing LLC, 2006, S. 206

[4] F. Dörfler, M. Chertkov, and F. Bullo. Synchronization in Complex Oscillator Networks and Smart Grids. http://arxiv.org/pdf/1208.0045v1.pdf

**Patentansprüche**

1. Verfahren zur rechnergestützten Steuerung der Leistung in einem elektrischen Stromnetz, wobei das Stromnetz eine vorgegebene Nennfrequenz aufweist und eine Mehrzahl von über Stromleitungen (PL) miteinander verbundenen Netzknoten (N1, N2, ..., N5) umfasst, welche jeweils Leistung in das Stromnetz einspeisen oder aus dem Stromnetz entnehmen, wobei die in den jeweiligen Netzknoten (N1, N2, ..., N5) eingespeiste oder entnommene Leistung über eine Proportionalitätsbeziehung gegeben ist, gemäß der sich in einem vorgegebenen Frequenzbereich der Spannungen im jeweiligen Netzknoten (N1, N2, ..., N5) die Leistung basierend auf einer Referenzleistung (P10, ..., P50), welche die entnommene oder eingespeiste Leistung bei Nennfrequenz ist, und einem Proportionalitätsfaktor (k1, ..., k5) in Abhängigkeit von der Differenz zwischen der Frequenz der Spannung im jeweiligen Netzknoten (N1, N2, ..., N5) und der Nennfrequenz des Stromnetzes einstellt, wobei in zumindest einem Teil der Netzknoten (N1, N2, ..., N5) ein Proportionalregler vorgesehen ist, für den die Referenzleistung (P10, P20, ..., P50) und/oder der Proportionalitätsfaktor (k1, k2, ..., k5) einstellbar ist,
**dadurch gekennzeichnet, dass**

a) ein stationärer Zustand des Stromnetzes modelliert wird, bei dem sich eine konstante Frequenz für alle Spannungen der Netzknoten einstellt;
b) ein Optimierungsproblem gelöst wird und hierdurch Referenzleistungen (P10, P20, ..., P50) und Proportionalitätsfaktoren (k1, k2, ..., k5) für zumindest einen Teil der Proportionalregler bestimmt werden, wobei das Optimierungsproblem basierend auf einer Bedingung an den modellierten stationären Zustand definiert ist, bei deren Erfüllung die Phasendifferenzen zwischen den Spannungen benachbarter Netzknoten (N1, N2, ..., N5) jeweils kleiner oder kleiner gleich einem maximalen Phasenwert sind;
c) der zumindest eine Teil der Proportionalregler auf die in Schritt b) bestimmten Referenzleistungen (P10, P20, ..., P50) und Proportionalitätsfaktoren (k1, k2, ..., k5) eingestellt wird.

2. Verfahren nach Anspruch 1, **dadurch gekennzeichnet, dass** die Proportionalitätsbeziehung in den jeweiligen Netzknoten wie folgt lautet:

$$\tilde{p}_i = \tilde{p}_{i0} - k_{\theta i}(\dot{\tilde{\theta}}_i - \omega_0)$$

wobei $\tilde{p}_i$ die von einem jeweiligen Netzknoten i eingespeiste oder entnommene Leistung ist;
wobei $\tilde{p}_{i0}$ der Summe aus der Referenzleistung $p_{i0}$ und der lokalen Last $p_{iL}$ im Knoten i entspricht;
wobei $k_{\theta i}$ der Proportionalitätsfaktor im Knoten i ist;

wobei $\dot{\tilde{\theta}}_i$ die Frequenz der Spannung des Netzknotens i ist;
wobei $\omega_0$ die Nennfrequenz des Stromnetzes ist.

3. Verfahren nach Anspruch 1 oder 2, **dadurch gekennzeichnet, dass** der stationäre Zustand des Stromnetzes basierend auf einem dynamischen physikalischen Modell modelliert wird, wobei das dynamische physikalische Modell den Zeitverlauf der Phasen der Spannungen in den jeweiligen Netzknoten (N1, N2, ..., N5) in Abhängigkeit von Parametern des Stromnetzes umfassend die Referenzleistungen (P10, P20, ..., P50) und Proportionalitätsfaktoren (k1, k2, ..., k5) der Proportionalitätsbeziehungen beschreibt.

4. Verfahren nach Anspruch 3, **dadurch gekennzeichnet, dass** das dynamische physikalische Modell ein System aus gekoppelten Differentialgleichungen umfasst, wobei eine jeweilige Differentialgleichung den zeitlichen Verlauf der Phase der Spannung eines Netzknotens (N1, N2, ..., N5) repräsentiert.

5. Verfahren nach Anspruch 4, **dadurch gekennzeichnet, dass** das System aus gekoppelten Differentialgleichungen ein physikalisches Schwingungsgleichungssystem darstellt.

6. Verfahren nach Anspruch 5 in Kombination mit Anspruch 2, **dadurch gekennzeichnet, dass** das Schwingungsgleichungssystem wie folgt lautet:

$$M_i\ddot{\tilde{\theta}}_i + k_{\theta i}\,\dot{\tilde{\theta}}_i = \quad k_{\theta i}\omega_0 + \tilde{p}_{i0} - p_{iL} - \sum_{j\in N_i} b_{ij}u_i u_j \sin(\tilde{\theta}_i - \tilde{\theta}_j)$$

wobei $M_i$ das Trägheitsmoment einer an das Stromnetz gekoppelten Masse im jeweiligen Netzknoten i ist;

wobei $\ddot{\tilde{\theta}}_i$ die Ableitung der Frequenz der Spannung im jeweiligen Netzknoten i ist;
wobei $\tilde{\theta}_i$ bzw. $\tilde{\theta}_j$ die Phase der Spannung im jeweiligen Netzknoten i bzw. j ist;
wobei $N_i$ die Menge der zu einem jeweiligen Netzknoten i benachbarten Netzknoten (N1, N2, ..., N5) repräsentiert;
wobei $u_i$ bzw. $u_j$ die Effektivwerte der Spannungen in den jeweiligen Netzknoten i bzw. j sind;
wobei $b_{ij}$ die Suszeptanz der Stromleitung zwischen Netzknoten i und j ist.

7. Verfahren nach einem der vorhergehenden Ansprüche, **dadurch gekennzeichnet, dass** der stationäre Zustand des Stromnetzes basierend auf Lastflussgleichungen für die in den jeweiligen Netzknoten (N1, N2, ..., N5) erzeugten Wirkleistungen modelliert wird.

8. Verfahren nach Anspruch 7, **dadurch gekennzeichnet, dass** in den Lastflussgleichungen die Bedingung berücksichtigt wird, dass der ohmsche Widerstand auf den Stromleitungen (PL) zwischen benachbarten Netzknoten (N1, N2, ..., N5) im Stromnetz vernachlässigbar klein gegenüber dem Blindwiderstand auf den Stromleitungen (PL) zwischen benachbarten Netzknoten (N1, N2, ..., N5) ist.

9. Verfahren nach Anspruch 7 oder 8, **dadurch gekennzeichnet, dass** die Lastflussgleichung für einen jeweiligen Netzknoten i wie folgt lautet:

$$P_i = \sum_{j\in N_i}\left[u_i^2 \frac{r_{ij}}{r_{ij}^2 + x_{ij}^2} - \frac{u_i u_j}{r_{ij}^2 + x_{ij}^2}\left(r_{ij}\cos(\tilde{\theta}_j - \tilde{\theta}_i) + x_{ij}\sin(\tilde{\theta}_j - \tilde{\theta}_i)\right)\right]$$

wobei $P_i$ die am Knoten i erzeugte Wirkleistung ist;
wobei $\tilde{\theta}_i$ bzw. $\tilde{\theta}_j$ die Phase der Spannung im jeweiligen Netzknoten i bzw. j ist;
wobei $N_i$ die Menge der zu einem jeweiligen Netzknoten i benachbarten Netzknoten (N1, N2, ..., N5) repräsentiert;
wobei $u_i$ bzw. $u_j$ die Effektivwerte der Spannungen in den jeweiligen Netzknoten i bzw. j sind;
wobei $r_{ij}$ der ohmsche Widerstand und $x_{ij}$ der Blindwiderstand der Stromleitung zwischen Knoten i und j ist.

10. Verfahren nach einem der vorhergehenden Ansprüche in Kombination mit Anspruch 2, **dadurch gekennzeichnet,**

**dass** die Bedingung an den modellierten stationären Zustand wie folgt lautet:

$$\left\| B^T L^\dagger \omega \right\|_\infty \leq \sin(\gamma) \quad \gamma \in \left[ 0, \frac{\pi}{2} \right[$$

wobei $L^\dagger$ die Pseudo-Inverse der Matrix $L = B\text{diag}(a_{ij})B^T$ ist, wobei $a_{ij} = b_{ij}u_iu_j$ ist;
wobei $u_i$ bzw. $u_j$ die Effektivwerte der Spannungen in den jeweiligen Netzknoten i bzw. j sind;
wobei $b_{ij}$ die Suszeptanz der Stromleitung zwischen Knoten i und j ist;
wobei $B^T$ die Inzidenzmatrix der Topologie des Stromnetzes ist;

$$\omega_i = p_{i0} - k_{\theta i} \frac{\sum_{i=0}^N p_{i0}}{\sum_{i=0}^N k_{\theta i}}$$

wobei $\omega = \text{vec}(\omega_i)$ mit $\qquad$ ist und N die Anzahl der Netzknoten im Stromnetz repräsentiert;
wobei $\gamma$ den maximalen Phasenwert repräsentiert,
wobei das Optimierungsproblem die Minimierung von $\|B^T L^\dagger \omega\|_\infty$ in Abhängigkeit von den Referenzleistungen (P10, P20, ..., P50) und Proportionalitätsfaktoren (k1, k2, ..., k5) des zumindest einen Teils der Proportionalregler ist.

11. Verfahren nach einem der vorhergehenden Ansprüche, **dadurch gekennzeichnet, dass** das Optimierungsproblem im Rahmen dessen Lösung in ein konvexes Optimierungsproblem gewandelt wird.

12. Verfahren nach einem der vorhergehenden Ansprüche, **dadurch gekennzeichnet, dass** bei der Lösung des Optimierungsproblems als Randbedingung berücksichtigt wird, dass die Referenzleistungen (P10, P20, ..., P50) zumindest eines Teils der Proportionalregler in einem vorbestimmten Intervall liegen.

13. Verfahren nach einem der vorhergehenden Ansprüche, **dadurch gekennzeichnet, dass** bei der Lösung des Optimierungsproblems als Randbedingung berücksichtigt wird, dass die Referenzleistungen (P10, P20, ..., P50) der Proportionalitätsbeziehungen aller Netzknoten (N1, N2, ..., N5) innerhalb eines vorbestimmten Schwankungsmaßes schwanken.

14. Verfahren nach Anspruch 13, **dadurch gekennzeichnet, dass** das Schwankungsmaß derart definiert ist, dass die Schwankung der Referenzleistung (P10, P20, ..., P50) der Proportionalitätsbeziehung jedes Netzknotens (N1, N2, ..., N5) kleiner oder kleiner gleich einem vorbestimmten Wert ist.

15. Verfahren nach Anspruch 13, **dadurch gekennzeichnet, dass** das Schwankungsmaß derart definiert ist, dass eine Summe und insbesondere eine gewichtete Summe der Schwankungen der Referenzleistungen (P10, P20, ..., P50) der Proportionalitätsbeziehungen aller Netzknoten (N1, N2, ..., N5) kleiner oder kleiner gleich einem vorbestimmten Wert ist.

16. Verfahren nach einem der vorhergehenden Ansprüche, **dadurch gekennzeichnet, dass** bei der Lösung des Optimierungsproblems als Randbedingung berücksichtigt wird, dass die sich im stationären Zustand im Stromnetz einstellende Netzfrequenz weniger als ein vorbestimmter Frequenzwert von der Nennfrequenz des Stromnetzes abweicht.

17. Verfahren nach Anspruch 16, **dadurch gekennzeichnet, dass** zumindest ein Teil der Netzknoten (N1, N2, ..., N5) Primärregelleistung für das Stromnetz vorhalten, wobei aus der Randbedingung, dass die sich im stationären Zustand im Stromnetz einstellende Netzfrequenz weniger als ein vorbestimmter Frequenzwert von der Nennfrequenz abweicht, eine weitere, bei der Lösung des Optimierungsproblems berücksichtigte Randbedingung abgeleitet wird, gemäß der die jeweiligen Primärregelleistungen kleiner oder kleiner gleich einem vorbestimmten Schwellwert sind.

18. Verfahren nach Anspruch 16 oder 17, **dadurch gekennzeichnet, dass** Schritt b) mehrmals für immer kleiner werdende vorbestimmte Frequenzwerte durchgeführt wird, bis der sich in Schritt b) durch die Lösung des Optimierungsproblems ergebende minimierte Maximalwert eine vorbestimmte Schwelle überschreitet, wobei der zumindest eine Teil der Proportionalregler auf die Referenzleistungen (P10, P20, ..., P50) und Proportionalitätsfaktoren (k1, k2, ..., k5) eingestellt wird, welche sich aus dem Schritt b) unmittelbar vor Überschreiten der vorbestimmten Schwelle ergeben.

**19.** Verfahren nach einem der vorhergehenden Ansprüche, **dadurch gekennzeichnet, dass** das Optimierungsproblem die Minimierung einer Kostenfunktion beschreibt, welche umso größer ist, je größer der maximale Phasenwert ist.

**20.** Verfahren nach Anspruch 19, **dadurch gekennzeichnet, dass** die Kostenfunktion als einzigen Term den maximalen Phasenwert umfasst oder dass die Kostenfunktion eine Summe aus einem Term des maximalen Phasenwerts und einem oder mehreren weiteren Termen umfasst, wobei der oder die weiteren Terme vorzugsweise derart ausgestaltet sind, dass zumindest einer der weiteren Terme umso größer ist, je größer die durch die Netzknoten (N1, N2, ..., N5) eingespeiste Leistung ist und/oder je kleiner die durch die Netzknoten (N1, N2, ..., N5) entnommene Leistung ist und/oder je größer die durch die Netzknoten (N1, N2, ..., N5) vorgehaltene Primärregelleistung ist.

**21.** Verfahren nach einem der Ansprüche 1 bis 18, **dadurch gekennzeichnet, dass** das Optimierungsproblem die Minimierung einer Kostenfunktion beschreibt, welche von dem maximalen Phasenwert unabhängig ist, wobei als Randbedingung des Optimierungsproblems berücksichtigt wird, dass der maximale Phasenwert kleiner als ein vorgegebener Schwellwert ist.

**22.** Vorrichtung zur rechnergestützten Steuerung der Leistung in einem elektrischen Stromnetz, wobei das Stromnetz eine vorgegebene Nennfrequenz aufweist und eine Mehrzahl von über Stromleitungen (PL) miteinander verbundenen Netzknoten (N1, N2, ..., N5) umfasst, welche jeweils Leistung in das Stromnetz einspeisen oder aus dem Stromnetz entnehmen, wobei die in den jeweiligen Netzknoten (N1, N2, N3, N4, N5) eingespeiste oder entnommene Leistung über eine Proportionalitätsbeziehung gegeben ist, gemäß der sich in einem vorgegebenen Frequenzbereich der Spannungen im jeweiligen Netzknoten (N1, N2, ..., N5) die Leistung basierend auf einer Referenzleistung (P10, P20, ..., P50), welche die entnommene oder eingespeiste Leistung bei Nennfrequenz ist, und einem Proportionalitätsfaktor (k1, k2, ..., k5) in Abhängigkeit von der Differenz zwischen der Frequenz der Spannung im jeweiligen Netzknoten (N1, N2, ..., N5) und der Nennfrequenz des Stromnetzes einstellt, wobei in zumindest einem Teil den Netzknoten (N1, N2, ..., N5) ein Proportionalregler vorgesehen ist, für den die Referenzleistung (P10, P20, ..., P50) und/oder der Proportionalitätsfaktor (k1, k2, ..., k5) einstellbar ist,
**dadurch gekennzeichnet, dass**
die Vorrichtung zur Durchführung eines Verfahrens eingerichtet ist, bei dem

a) ein stationärer Zustand des Stromnetzes modelliert wird, bei dem sich eine konstante Frequenz für alle Spannungen der Netzknoten einstellt;
b) ein Optimierungsproblem gelöst wird und hierdurch Referenzleistungen (P10, P20, ..., P50) und Proportionalitätsfaktoren (k1, k2, ..., k5) für zumindest einen Teil der Proportionalregler bestimmt werden, wobei das Optimierungsproblem basierend auf einer Bedingung an den modellierten stationären Zustand definiert ist, bei deren Erfüllung die Phasendifferenzen zwischen den Spannungen benachbarter Netzknoten (N1, N2, ..., N5) jeweils kleiner oder kleiner gleich einem maximalen Phasenwert sind;
c) der zumindest eine Teil der Proportionalregler auf die in Schritt b) bestimmten Referenzleistungen (P10, P20, ..., P50) und Proportionalitätsfaktoren (k1, k2, ..., k5) eingestellt wird.

**23.** Vorrichtung nach Anspruch 22, **dadurch gekennzeichnet, dass** die Vorrichtung zur Durchführung eines Verfahrens nach einem der Ansprüche 2 bis 21 eingerichtet ist.

**24.** Elektrisches Stromnetz, welches eine vorgegebene Nennfrequenz aufweist und eine Mehrzahl von über Stromleitungen (PL) miteinander verbundenen Netzknoten (N1, N2, ..., N5) umfasst, welche im Betrieb jeweils Leistung in das Stromnetz einspeisen oder aus dem Stromnetz entnehmen, wobei die in den jeweiligen Netzknoten (N1, N2, N3, N4, N5) eingespeiste oder entnommene Leistung über eine Proportionalitätsbeziehung gegeben ist, gemäß der sich in einem vorgegebenen Frequenzbereich der Spannungen im jeweiligen Netzknoten (N1, N2, ..., N5) die Leistung basierend auf einer Referenzleistung (P10, P20, ..., P50), welche die entnommene oder eingespeiste Leistung bei Nennfrequenz ist, und einem Proportionalitätsfaktor (k1, k2, ..., k5) in Abhängigkeit von der Differenz zwischen der Frequenz der Spannung im jeweiligen Netzknoten (N1, N2, ..., N5) und der Nennfrequenz des Stromnetzes einstellt, wobei in zumindest einem Teil den Netzknoten (N1, N2, ..., N5) ein Proportionalregler vorgesehen ist, für den die Referenzleistung (P10, P20, ..., P50) und/oder der Proportionalitätsfaktor (k1, k2, ..., k5) einstellbar ist,
**dadurch gekennzeichnet, dass**
das Stromnetz eine Vorrichtung zur rechnergestützten Steuerung der erzeugten Leistung nach Anspruch 22 oder 23 umfasst.

**Claims**

1. Method for the computer-aided control of the power in an electrical grid, wherein the electrical grid has a preset rated frequency and comprises a plurality of nodes (N1, N2, ..., N5), which are connected to one another via electrical lines (PL) and each feed power into the electrical grid or draw power from the electrical grid, wherein the power fed into or drawn from the respective nodes (N1, N2, ..., N5) is given via a proportionality relationship, in accordance with which, in a preset frequency range of the voltages at the respective node (N1, N2, ..., N5), the power is set on the basis of a reference power (P10, ..., P50), which is the drawn or fed power at the rated frequency, and on the basis of a proportionality factor (k1, ..., k5) depending on the difference between the frequency of the voltage in the respective node (N1, N2, ..., N5) and the rated frequency of the electrical grid, wherein a proportional controller is provided in at least some of the nodes (N1, N2, ..., N5), for which proportional controller the reference power (P10, P20, ..., P50) and/or the proportionality factor (k1, k2, ..., k5) can be set,
**characterized in that**

a) a steady state of the electrical grid is modeled in which a constant frequency is met for all of the voltages of the nodes;
b) an optimization problem is solved and hereby reference powers (P10, P20, ..., P50) and proportionality factors (k1, k2, ..., k5) are determined for at least some of the proportional controllers, wherein the optimization problem is defined on the basis of a condition for the modeled steady state, wherein when said condition is met, the phase differences between the voltages of adjacent nodes (N1, N2, ..., N5) are each less than or less than or equal to a maximum phase value;
c) the at least some of the proportional controllers are set to the reference powers (P10, P20, ..., P50) and proportionality factors (k1, k2, ..., k5) determined in step b) .

2. Method according to Claim 1, **characterized in that** the proportionality relationship in the respective nodes is as follows:

$$\tilde{p}_i = \tilde{p}_{i0} - k_{\theta i}(\dot{\bar{\theta}}_i - \omega_0) \,,$$

wherein $\bar{p}_i$ is the power fed or drawn by a respective node i;
wherein $\tilde{p}_{i0}$ is the sum of the reference power $p_{i0}$ and the local load $p_{iL}$ in the node i;
wherein $k_{\theta i}$ is the proportionality factor in the node i;

wherein $\dot{\bar{\theta}}_i$ is the frequency of the voltage of the node i;
wherein $\omega_0$ is the rated frequency of the electrical grid.

3. Method according to Claim 1 or 2, **characterized in that** the steady state of the electrical grid is modeled on the basis of a dynamic physical model, wherein the dynamic physical model describes the time profile of the phases of the voltages in the respective nodes (N1, N2, ..., N5) as a function of parameters of the electrical grid comprising the reference powers (P10, P20, ..., P50) and proportionality factors (k1, k2, ..., k5) of the proportionality relationships.

4. Method according to Claim 3, **characterized in that** the dynamic physical model comprises a system of coupled differential equations, wherein a respective differential equation represents the time profile of the phase of the voltage of a node (N1, N2, ..., N5).

5. Method according to Claim 4, **characterized in that** the system of coupled differential equations represents a physical oscillation equation system.

6. Method according to Claim 5 in combination with Claim 2, **characterized in that** the oscillation equation system is as follows:

$$M_i\ddot{\bar{\theta}}_i + k_{\theta i}\dot{\bar{\theta}}_i = k_{\theta i}\omega_0 + \tilde{p}_{i0} - p_{iL} - \sum_{j \in N_i} b_{ij}u_iu_j \sin(\bar{\theta}_i - \bar{\theta}_j) \,,$$

where $M_i$ is the moment of inertia of a mass coupled to the electrical grid in the respective node i;

where $\ddot{\bar{\theta}}_i$ is the derivative of the frequency of the voltage in the respective node i;

where $\overline{\theta_i}$ and $\overline{\theta_j}$ are the phase of the voltage in the respective node i and j, respectively;
where $N_i$ represents the amount of nodes (N1, N2, ..., N5) adjacent to a respective node i;
where $u_i$ and $u_j$ are the rms values of the voltages in the respective nodes i and j, respectively;
where $b_{ij}$ is the susceptance of the electrical line between nodes i and j.

7. Method according to one of the preceding claims, **characterized in that** the steady state of the electrical grid is modeled on the basis of load flow equations for the real powers generated in the respective nodes (N1, N2, ..., N5).

8. Method according to Claim 7, **characterized in that** the condition whereby the ohmic resistance on the electrical lines (PL) between adjacent nodes (N1, N2, ..., N5) in the electrical grid is negligibly low in comparison with the reactance on the electrical lines (PL) between adjacent nodes (N1, N2, ..., N5) is taken into consideration in the load flow equations.

9. Method according to Claim 7 or 8, **characterized in that** the load flow equation for a respective node i is as follows:

$$P_i = \sum_{j \in N_i} \left[ u_i^2 \frac{r_{ij}}{r_{ij}^2 + x_{ij}^2} - \frac{u_i u_j}{r_{ij}^2 + x_{ij}^2} (r_{ij} \cos(\tilde{\theta}_j - \tilde{\theta}_i) + x_{ij} \sin(\tilde{\theta}_j - \tilde{\theta}_i)) \right],$$

where $P_i$ is the real power generated at the node i;
where $\tilde{\theta}_i$ and $\tilde{\theta j}$ are the phase of the voltage in the respective nodes i and j;
where $N_i$ represents the amount of nodes (N1, N2, ..., N5) adjacent to a respective node i;
where $u_i$ and $u_j$ are the rms values of the voltages in the respective nodes i and j;
where $r_{ij}$ is the ohmic resistance and $x_{ij}$ is the reactance of the electrical line between nodes i and j.

10. Method according to one of the preceding claims in combination with Claim 2, **characterized in that** the condition for the modeled steady state is as follows:

$$\left\| B^T L^\dagger \omega \right\|_\infty \leq \sin(\gamma) \quad \gamma \in [0, \frac{\pi}{2}],$$

where $L^\dagger$ is the pseudo-inverse of the matrix $L = B\mathrm{diag}(a_{ij})B^T$,
where $a_{ij} = b_{ij} u_i u_j$;
where $u_i$ and $u_j$ are the rms values of the voltages in the respective nodes i and j;
where $b_{ij}$ is the susceptance of the electrical line between nodes i and j;
where $B^T$ is the incidence matrix of the topology of the electrical grid;
where $\omega = \mathrm{vec}(\omega_i)$, where $\omega_i = p_{i0} - k_{\theta i} \frac{\sum_{i=0}^{N} p_{i0}}{\sum_{i=0}^{N} k_{\theta i}}$, and N represents the number of the nodes in the electrical grid;
where $\gamma$ represents the maximum phase value,
where the optimization problem is the minimization of $\|B^T L^\dagger \omega\|_\infty$ as a function of the reference powers (P10, P20, ..., P50) and proportionality factors (k1, k2, ... k5) of the at least some of the proportional controllers.

11. Method according to one of the preceding claims, **characterized in that** the optimization problem, in order to solve this problem, is converted into a convex optimization problem.

12. Method according to one of the preceding claims, **characterized in that**, during the solution of the optimization problem, it is considered, as boundary condition, that the reference powers (P10, P20, ..., P50) of at least some of the proportional controllers are within a predetermined interval.

13. Method according to one of the preceding claims, **characterized in that**, during the solution of the optimization problem, it is considered, as boundary condition, that the reference powers (P10, P20, ..., P50) of the proportionality relationships of all of the nodes (N1, N2, ..., N5) fluctuate within a predetermined fluctuation degree.

14. Method according to Claim 13, **characterized in that** the fluctuation degree is defined in such a way that the fluctuation in the reference power (P10, P20, ..., P50) of the proportionality relationship of each node (N1, N2, ...,

N5) is less than or less than or equal to a predetermined value.

15. Method according to Claim 13, **characterized in that** the fluctuation degree is defined in such a way that a sum and in particular a weighted sum of the fluctuations in the reference powers (P10, P20, ..., P50) of the proportionality relationships of all of the nodes (N1, N2, ..., N5) is less than or less than or equal to a predetermined value.

16. Method according to one of the preceding claims, **characterized in that**, during the solution of the optimization problem, it is considered, as boundary condition, that the line frequency set in the steady state in the electrical grid deviates from the rated frequency of the electrical grid by less than a predetermined frequency value.

17. Method according to Claim 16, **characterized in that** at least some of the nodes (N1, N2, ..., N5) have available primary control power for the electrical grid, wherein, from the boundary condition whereby the line frequency set in the steady state in the electrical grid deviates from the rated frequency by less than a predetermined frequency value, a further boundary condition is derived which is taken into consideration in the solution of the optimization problem and in accordance with which the respective primary control powers are less than or less than or equal to a predetermined threshold value.

18. Method according to Claim 16 or 17, **characterized in that** step b) is implemented a number of times for ever decreasing predetermined frequency values until the minimized maximum value resulting in step b) from the solution of the optimization problem exceeds a predetermined threshold, wherein the at least some of the proportional controllers is set to the reference powers (P10, P20, ..., P50) and proportionality factors (k1, k2, ..., k5) which result from step b) directly prior to the predetermined threshold being exceeded.

19. Method according to one of the preceding claims, **characterized in that** the optimization problem describes the minimization of a cost function, which is greater the greater the maximum phase value is.

20. Method according to Claim 19, **characterized in that** the cost function comprises, as single term, the maximum phase value, or **in that** the cost function comprises a sum of a term of the maximum phase value and one or more further terms, wherein the further term(s) is/are preferably configured in such a way that at least one of the further terms is greater the greater the power fed by the nodes (N1, N2, ..., N5) and/or the lower the power drawn by the nodes (N1, N2, ..., N5) and/or the greater the primary control power that the nodes (N1, N2, ..., N5) have available.

21. Method according to one of Claim 1 to 18, **characterized in that** the optimization problem describes the minimization of a cost function which is independent of the maximum phase value, wherein, as boundary condition of the optimization problem, it is considered that the maximum phase value is less than a preset threshold value.

22. Apparatus for computer-aided control of the power in an electrical grid, wherein the electrical grid has a preset rated frequency and comprises a plurality of nodes (N1, N2, ..., N5), which are connected to one another via electrical lines (PL) and which each feed power into the electrical grid or draw power from the electrical grid, wherein the power fed in or drawn by the respective nodes (N1, N2, N3, N4, N5) is given via a proportionality relationship, in accordance with which, in a preset frequency range of the voltages in the respective node (N1, N2, ..., N5), the power is set on the basis of a reference power (P10, P20, ..., P50), which is the drawn or fed power at rated frequency, and a proportionality factor (k1, k2, ..., k5) depending on the difference between the frequency of the voltage in the respective node (N1, N2, ..., N5) and the rated frequency of the electrical grid, wherein a proportional controller is provided in at least some of the nodes (N1, N2, ..., N5), for which proportional controller the reference power (P10, P20, ..., P50) and/or the proportionality factor (k1, k2, ..., k5) can be set,
**characterized in that**
the apparatus is designed for implementing a method in which

a) a steady state of the electrical grid is modeled in which a constant frequency is met for all of the voltages of the nodes;
b) an optimization problem is solved and hereby reference powers (P10, P20, ..., P50) and proportionality factors (k1, k2, ..., k5) are determined for at least some of the proportional controllers, wherein the optimization problem is defined on the basis of a condition for the modeled steady state, wherein when said condition is met, the phase differences between the voltages of adjacent nodes (N1, N2, ..., N5) are each less than or less than or equal to a maximum phase value;
c) the at least some of the proportional controllers are set to the reference powers (P10, P20, ..., P50) and proportionality factors (k1, k2, ..., k5) determined in step b) .

23. Apparatus according to Claim 22, **characterized in that** the apparatus is designed for implementing a method according to one of Claims 2 to 21.

24. Electrical grid, which has a preset rated frequency and comprises a plurality of nodes (N1, N2, ..., N5), which are connected to one another via electrical lines (PL) and which each feed power into the electrical grid or draw power from the electrical grid during operation, wherein the power fed or drawn by the respective nodes (N1, N2, N3, N4, N5) is given via a proportionality relationship, in accordance with which, in a preset frequency range of the voltages in the respective node (N1, N2, ..., N5), the power is set on the basis of a reference power (P10, P20, ..., P50), which is the drawn or fed power at the rated frequency, and a proportionality factor (k1, k2, ..., k5) in dependence on the difference between the frequency of the voltage in the respective node (N1, N2, ..., N5) and the rated frequency of the electrical grid, wherein a proportional controller is provided in at least some of the nodes (N1, N2, ..., N5), for which proportional controller the reference power (P10, P20, ..., P50) and/or the proportionality factor (k1, k2, ..., k5) can be set, **characterized in that**
the electrical grid comprises an apparatus for computer-aided control of the generated power according to Claim 22 or 23.

**Revendications**

1. Procédé de commande assistée par ordinateur de la puissance dans un réseau électrique, le réseau électrique présentant une fréquence nominale prédéfinie et comprenant une pluralité de noeuds de réseau (N1, N2, ..., N5) interconnectés par des lignes électriques (PL), lesquels injectent respectivement de la puissance dans le réseau électrique ou en prélèvent du réseau, la puissance injectée ou prélevée dans les noeuds de réseau respectifs (N1, N2,..., N5) étant donnée par un rapport de proportionnalité, selon lequel, dans un domaine de fréquence prédéterminé des tensions dans le noeud de réseau respectif (N1, N2,..., N5), la puissance, sur base d'une puissance de référence (P10,..., P50), laquelle est la puissance prélevée ou injectée par fréquence nominale, et d'un facteur de proportionnalité (k1,..., k5), s'établit en fonction de la différence entre la fréquence de la tension dans le noeud de réseau (N1, N2,..., N5) respectif et la fréquence nominale du réseau, dans au moins une partie des noeuds de réseau (N1, N2,..., N5) un régulateur proportionnel étant prévu, pour lequel la puissance de référence (P10,..., P50) et/ou le facteur de proportionnalité (k1, k2, k5) peut être réglé,
**caractérisé en ce que**

a) un état stationnaire du réseau électrique est modélisé, où s'établit une fréquence constante pour toutes les tensions des noeuds de réseau;
b) un problème d'optimisation est résolu et de ce fait des puissances de référence (P10, P20,..., P50) et des facteurs de proportionnalité (k1, k2,..., k5) pour au moins une partie des régulateurs proportionnels sont déterminés, le problème d'optimisation étant défini en se basant sur une condition de l'état stationnaire modélisé, la satisfaction de celle-ci étant que les différences de phase entre les tensions des noeuds de réseau voisins (N1, N2,..., N5) sont respectivement plus petites ou plus petites ou égales à une valeur de phase maximale;
c) la au moins une partie des régulateurs proportionnels s'établit sur les puissances de référence (P10, P20,..., P50) déterminées à l'étape b) et les facteurs de proportionnalité (k1, k2,..., k5).

2. Procédé selon la revendication 1, **caractérisé en ce que** le rapport de proportionnalité dans les noeuds de réseau respectifs s'exprime de la manière suivante:

$$\tilde{p}_i = \tilde{p}_{i0} - k_{\theta i}(\dot{\tilde{\theta}}_i - \omega_0)$$

$\tilde{p}_i$ étant la puissance injectée ou prélevée d'un noeud de réseau respectif i;
$\tilde{p}_{i0}$ correspondant à la somme de la puissance de référence $p_{i0}$ et de la charge locale $p_{iL}$ dans le noeud i;
$k_{\theta i}$ étant le facteur de proportionnalité dans le noeud i;
$\dot{\tilde{\theta}}_i$ étant la fréquence de la tension du noeud de réseau i;
$\omega_0$ étant la fréquence nominale du réseau.

3. Procédé selon la revendication 1 ou 2, **caractérisé en ce que** l'état stationnaire du réseau est modélisé sur base d'un modèle physique dynamique, le modèle physique dynamique décrivant l'écoulement du temps des phases des tensions dans les noeuds de réseau (N1, N2,..., N5) respectifs en fonction de paramètres du réseau comprenant les puissances de référence (P10, P20,..., P50) et les facteurs de proportionnalité (k1, k2,..., k5) des rapports de proportionnalité.

4.  Procédé selon la revendication 3, **caractérisé en ce que** le modèle physique dynamique comprend un système d'équations différentielles couplées, une équation différentielle respective représentant l'écoulement temporel de la phase de la tension d'un noeud de réseau (N1, N2,..., N5).

5.  Procédé selon la revendication 4, **caractérisé en ce que** le système d'équations différentielles couplées représente un système d'équations d'oscillations physique.

6.  Procédé selon la revendication 5 en combinaison avec la revendication 2, **caractérisé en ce que** le système d'équation d'oscillations est exprimé de la manière suivante:

$$M_i \ddot{\tilde{\theta}}_i + k_{\theta i} \dot{\tilde{\theta}}_i = k_{\theta i} \omega_0 + \tilde{p}_{i0} - p_{iL} - \sum_{j \in N_i} b_{ij} u_i u_j \sin(\tilde{\theta}_i - \tilde{\theta}_j)$$

$M_i$ étant le moment d'inertie d'une masse raccordée au réseau dans le noeud de réseau respectif i;

$\ddot{\tilde{\theta}}_i$ étant la dérivation de la fréquence de la tension dans le noeud de réseau respectif i;

$\tilde{\theta}_i$ ou $\tilde{\theta}_j$ ; étant la phase de la tension dans le noeud de réseau i respectif ou j;

$N_i$ représentant la quantité des noeuds de réseau (N1, N2,..., N5) voisins d'un noeud de réseau i respectif;

$u_i$ ou $u_j$ étant les valeurs effectives des tensions dans les noeuds de réseau i ou j respectifs;

$b_{ij}$ étant la susceptance de la ligne électrique entre les noeuds de réseau i et j.

7.  Procédé selon l'une des revendications précédentes, **caractérisé en ce que** l'état stationnaire du réseau est modélisé sur base des équations du débit de charge pour les puissances réelles produites dans les noeuds de réseau (N1, N2,..., N5) respectifs.

8.  Procédé selon la revendication 7, **caractérisé en ce que** dans les équations de débit de charge, la condition selon laquelle la résistance ohmique sur les lignes électriques (PL) entre des noeuds de réseau (N1, N2,..., N5) voisins dans le réseau est relativement petite par rapport à la réactance sur les lignes électriques (PL) entre des noeuds de réseau (N1, N2,..., N5) voisins, est prise en compte.

9.  Procédé selon la revendication 7 ou 8, **caractérisé en ce que** l'équation de débit de charge pour un noeud de réseau respectif i est exprimée de la manière suivante:

$$P_i = \sum_{j \in N_i} \left[ u_i^2 \frac{r_{ij}}{r_{ij}^2 + x_{ij}^2} - \frac{u_i u_j}{r_{ij}^2 + x_{ij}^2} (r_{ij} \cos(\tilde{\theta}_j - \tilde{\theta}_i) + x_{ij} \sin(\tilde{\theta}_j - \tilde{\theta}_i)) \right]$$

$P_i$ étant la puissance effective produite au noeud i;

$\tilde{\theta}_i$ ou $\tilde{\theta}_j$ ; étant la phase de la tension dans le noeud de réseau i ou j respectif;

$N_i$ représentant la quantité des noeuds de réseau (N1, N2,..., N5) voisins d'un noeud de réseau i respectif;

$u_i$ ou $u_j$ étant les valeurs effectives des tensions dans les noeuds de réseau i ou j respectifs;

$r_{ij}$ étant la résistance ohmique et $x_{ij}$ la réactance de la ligne électrique entre les noeuds i et j.

10. Procédé selon l'une des revendications précédentes en combinaison avec la revendication 2, **caractérisé en ce que** la condition à l'état stationnaire modélisé est exprimée de la manière suivante:

$$\left\| B^T L^\dagger \omega \right\|_\infty \leq \sin(\gamma) \quad \gamma \in [0, \frac{\pi}{2}[$$

$L^\dagger$ étant le pseudo-inverse de la matrice $L = B\text{diag}(a_{ij})B^T$ $a_{ij} = b_{ij}u_iu_j$ ;

$u_i$ ou $u_j$ étant les valeurs effectives des tensions dans les noeuds de réseau i ou j respectifs;

$b_{ij}$ étant la susceptance de la ligne électrique entre les noeuds i et j;

$B^T$ étant la matrice d'incidence de la topologie du réseau électrique;

$\omega$ = vec($\omega_i$) avec $\omega_i = p_{i0} - k_{\theta i}\dfrac{\sum_{i=0}^{N} p_{i0}}{\sum_{i=0}^{N} k_{\theta i}}$ et N représentant le nombre des noeuds de réseau dans le réseau électrique;

$\gamma$ représentant la valeur de phase maximale,

le problème d'optimisation étant la minimisation de $\|B^T L^\dagger \omega\|_\infty$ en fonction des puissances de référence (P10, P20,..., P50) et des facteurs de proportionnalité (k1, k2,..., k5) de la au moins une partie des régulateurs proportionnels.

11. Procédé selon l'une des revendications précédentes, **caractérisé en ce que** le problème d'optimisation est modifié, dans le cadre de sa résolution, en un problème d'optimisation convexe.

12. Procédé selon l'une des revendications précédentes, **caractérisé en ce que**, dans la résolution du problème d'optimisation comme condition marginale, il est tenu compte que les puissances de référence (P10, P20,..., P50) d'au moins une partie des régulateurs proportionnels se situent dans un intervalle prédéterminé.

13. Procédé selon l'une des revendications précédentes, **caractérisé en ce que**, dans la résolution du problème d'optimisation comme condition marginale, il est tenu compte que les puissances de référence (P10, P20,..., P50) des rapports de proportionnalité de tous les noeuds de réseau (N1, N2,..., N5) varient à l'intérieur d'une mesure de variation prédéterminée.

14. Procédé selon la revendication 13, **caractérisé en ce que** la mesure de variation est définie de telle sorte que la variation de la puissance de référence (P10, P20,..., P50) du rapport de proportionnalité de chaque noeud du réseau (N1, N2,..., N5) est plus petite ou plus petite ou égale à une valeur prédéterminée.

15. Procédé selon la revendication 13, **caractérisé en ce que** la mesure de variation est définie de telle sorte qu'une somme et en particulier une somme pondérée des variations des puissances de référence (P10, P20,..., P50) des rapports de proportionnalité de tous les noeuds de réseau (N1, N2,..., N5) est plus petite ou plus petite ou égale à une valeur prédéterminée.

16. Procédé selon l'une des revendications précédentes, **caractérisé en ce que**, dans la résolution du problème d'optimisation comme condition marginale, il est tenu compte que la fréquence de réseau s'établissant dans le réseau électrique à l'état stationnaire, dévie de la fréquence nominale du réseau électrique de moins qu'une valeur de fréquence prédéterminée.

17. Procédé selon la revendication 16, **caractérisé en ce qu'**au moins une partie des noeuds de réseau (N1, N2,..., N5) fournit la puissance standard primaire au réseau électrique, sachant que de la condition marginale selon laquelle la fréquence de réseau s'établissant dans le réseau électrique à l'état stationnaire dévie de la fréquence nominale de moins qu'une valeur de fréquence prédéterminée, une autre condition marginale prise en compte dans la résolution du problème d'optimisation, est dérivée, selon laquelle les puissances standards primaires respectives sont plus petites ou plus petites ou égales à une valeur de seuil prédéterminée.

18. Procédé selon la revendication 16 ou 17, **caractérisé en ce que** l'étape b) est exécutée plusieurs fois pour des valeurs de fréquence prédéterminées en diminution constante jusqu'à ce que la valeur maximale minimisée résultant à l'étape b) par la résolution du problème d'optimisation dépasse positivement un seuil prédéterminé, la au moins une partie des régulateurs proportionnels soit établie sur les puissances de référence (P10, P20,..., P50) et facteurs de proportionnalité (k1, k2,..., k5), lesquels résultent de l'étape b) directement avant le dépassement positif des seuils prédéterminés.

19. Procédé selon l'une des revendications précédentes, **caractérisé en ce que** le problème d'optimisation décrit la minimisation d'une fonction de coût, laquelle est d'autant plus grande que la valeur de phase maximale est grande.

20. Procédé selon la revendication 19, **caractérisé en ce que** la fonction de coût comprend comme terme unique la valeur de phase maximale ou **en ce que** la fonction de coût comprend une somme d'un terme de la valeur de phase maximale et d'un ou de plusieurs autres termes, le ou les autres termes étant réalisés de préférence de telle sorte que au moins un des autres termes est d'autant plus grand que la puissance injectée par les noeuds du réseau (N1, N2,..., N5) est grande et/ou que la puissance prélevée par les noeuds du réseau (N1, N2,..., N5) est petite et/ou que la puissance standard primaire fournie par les noeuds de réseau (N1, N2,..., N5) est grande.

21. Procédé selon l'une des revendications 1 à 18, **caractérisé en ce que** le problème d'optimisation décrit la minimisation d'une fonction de coût, laquelle est indépendante de la valeur de phase maximale, sachant qu'on tient compte comme condition marginale du problème d'optimisation de ce que la valeur de phase maximale est plus petite qu'une valeur de seuil prédéfinie.

22. Dispositif de commande assistée par ordinateur de puissance dans un réseau électrique, le réseau présentant une fréquence nominale prédéfinie et comprenant une pluralité de noeuds de réseau (N1, N2,..., N5) interconnectés par des lignes électriques (PL), lesquels injectent respectivement de la puissance dans le réseau ou en prélèvent du réseau, la puissance injectée ou prélevée dans les noeuds de réseau (N1, N2, N3, N4, N5) respectifs étant fournie par un rapport de proportionnalité, selon lequel, dans un domaine de fréquence prédéterminé des tensions dans les noeuds de réseau (N1, N2,..., N5) respectifs, la puissance, sur base d'une puissance de référence (P10, P20,..., P50), laquelle est la puissance prélevée ou injectée à la fréquence nominale, et d'un facteur de proportionnalité (k1, k2, k5), s'établit en fonction de la différence entre la fréquence de la tension dans le noeud de réseau (N1, N2,..., N5) respectif et la fréquence nominale du réseau, dans au moins une partie des noeuds de réseau (N1, N2,..., N5), un régulateur proportionnel étant prévu pour lequel la puissance de référence (P10, P20,..., P50) et/ou le facteur de proportionnalité (k1, k2, k5) peut être réglé, **caractérisé en ce que**
le dispositif d'exécution d'un procédé est installé, dans lequel:

a) un état stationnaire du réseau est modélisé, où s'établit une fréquence constante pour toutes les tensions des noeuds de réseau;
b) un problème d'optimisation est résolu et de ce fait des puissances de référence (P10, P20,..., P50) et des facteurs de proportionnalité (k1, k2,..., k5) pour au moins une partie des régulateurs proportionnels sont déterminés, le problème d'optimisation étant défini en se basant sur une condition à l'état stationnaire modélisé, la satisfaction de celle-ci étant que les différences de phase entre les tensions des noeuds de réseau voisins (N1, N2,..., N5) sont respectivement plus petites ou plus petites ou égales à une valeur de phase maximale;
c) la au moins une partie des régulateurs proportionnels s'établit sur les puissances de référence (P10, P20,..., P50) déterminées à l'étape b) et les facteurs de proportionnalité (k1, k2,..., k5).

23. Dispositif selon la revendication 22, **caractérisé en ce que** le dispositif d'exécution d'un procédé selon l'une des revendications 2 à 21 est installé.

24. Réseau électrique, lequel présente une fréquence nominale prédéfinie et comprend une pluralité de noeuds de réseau (N1, N2,..., N5) interconnectés par des lignes électriques (PL), lesquelles, en service, injectent dans le réseau respectivement de la puissance ou en prélèvent, la puissance injectée ou prélevée dans les noeuds respectifs du réseau (N1, N2, N3, N4, N5) étant fournie par un rapport de proportionnalité, selon lequel, dans un domaine de fréquence prédéterminé des tensions dans les noeuds de réseau (N1, N2,..., N5) respectifs, la puissance, sur base d'une puissance de référence (P10, P20,..., P50), laquelle est la puissance prélevée ou injectée à la fréquence nominale, et d'un facteur de proportionnalité (k1, k2,..., k5), s'établit en fonction de la différence entre la fréquence de la tension dans les noeuds de réseau (N1, N2,..., N5) respectifs et la fréquence nominale du réseau, dans au moins une partie des noeuds de réseau (N1, N2,..., N5) un régulateur proportionnel étant prévu, pour lequel la puissance de référence (P10, P20,..., P50) et/ou le facteur de proportionnalité (k1, k2,..., k5) peut être réglée, **caractérisé en ce que**
le réseau comprend un dispositif de commande assistée par ordinateur de la puissance produite selon la revendication 22 ou 23.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2683077 A1

**In der Beschreibung aufgeführte Nicht-Patentliteratur**

- **DÖRFLER et al.** *Synchronization in Complex Oscillator Networks and Smart Grids,* 1-20, http://arxiv.org/pdf/1208.0045v1
- **J. W. SIMPSON-PORCO ; F. DÖRFLER ; F. BULLO.** *Droop-Controlled Inverters are Kuramoto Oscillators,* 2012, http://arxiv.org/pdf/1206.5033v1.pdf
- **A. HOBALLAH ; I. ERLICH.** Dynamic Stability and Network Constrained Optimal Spinning Reserve Allocation. *Proc. IEEE Power and Energy Soc. General Meeting,* 2011, 1-5
- **PETER W. SAUER ; M. A. PAI.** Power System Dynamics and Stability. Stipes Publishing LLC, 2006, 206
- **F. DÖRFLER ; M. CHERTKOV ; F. BULLO.** *Synchronization in Complex Oscillator Networks and Smart Grids,* http://arxiv.org/pdf/1208.0045v1.pdf